# EUROPEAN PATENT APPLICATION

(11) **EP 4 571 394 A1**
(43) Date of publication of application: **18.06.2025**
(21) Application number: 23852981.2
(22) Date of filing: 09.08.2023
(51) Int. Cl.: G02B 27/09, G02B 27/18, G02B 7/02, G02B 17/02, G02B 27/00, G02B 27/01

(54) **PROJECTION DEVICE AND ELECTRONIC DEVICE INCLUDING SAME**

(30) Priority: 09.08.2022 KR 20220099074; 22.08.2022 KR 20220104648; 09.11.2022 KR 20220148634
(71) Applicant: LG INNOTEK CO. LTD, Gangseo-gu Seoul 07796 (KR)
(72) Inventor: KIM, Ji Sung, Seoul 07796 (KR); KO, Joong Yeol, Seoul 07796 (KR); LEE, Tae Hoon, Seoul 07796 (KR)
(74) Representative: M. Zardi & Co S.A.
(86) International application number: PCT/KR2023/011745
(87) International publication number: WO 2024/035110

(57) **Abstract**

An embodiment provides a projection device comprising: a light guide; a first light source disposed at a first side of the light guide; a lens group disposed at a fourth side of the light guide; and a first-side lens disposed between the first side of the light guide and the first light source, wherein the first side of the light guide overlaps the fourth side of the light guide in the optical-axis direction of the lens group, and the first-side lens comes into contact with the light guide.

## Description

### [Technical Field]

### TECHNICAL FIELD

The embodiments relate to a projection device and an electronic device including the same.

### [Background Art]

Virtual Reality (VR) refers to a specific environment or situation, or the technique itself, which is similar to reality, but not real, created by mean of artificial technology using computers or the like.

Augmented Reality (AR) is a technique that synthesizes virtual objects or information into a real environment to be appeared as an object existing in the original environment.

Mixed Reality (MR) or hybrid reality refers to creating a new environment or new information by combining a virtual world and the real world. In particular, real-time interaction between those existing in the real world and virtual world is referred to as mixed reality.

At this point, as the created virtual environment or situation stimulates users' five senses and allows spatial and temporal experiences similar to reality, the users may freely move between reality and imagination. In addition, users may interact with those implemented in this environment by handling or commanding using real devices, as well as simply immersing themselves in this environment.

Recently, researches on the equipment (gears, devices) used in this technical field are conducted actively. However, the need for miniaturizing the equipment and providing high resolution is emerging. In addition, the need for miniaturizing the equipment and providing high resolution is emerging.

### [Disclosure]

### [Technical Problem]

In using a projection device used for Augmented Reality (AR) or the like and an electronic device including the same, the embodiment provides a projection device and an electronic device, which can be miniaturized more easily by arranging a lens in a light guide to be closer than a light source.

In addition, it provides a projection device with reduced TTL, and an electronic device.

In addition, it provides a more compact projection device with improved optical uniformity, and an electronic device.

In addition, it provides a projection device with improved resolution, and an electronic device including the same.

In addition, it provides a projection device with improved reliability, and an electronic device including the same.

In addition, it provides a projection device with improved coupling strength and assembly property, and an electronic device including the same.

In addition, it provides a projection device easy to inspect and having improved coupling strength and durability, and an electronic device including the same.

The problems to be solved in the embodiments are not limited thereto, and it can be said that the objects or effects that can be grasped from the solutions of the problems or embodiments described below are also included.

### [Technical Solution]

A projection device according to an embodiment comprises: a light guide; a first light source disposed at a first side of the light guide; a lens group disposed at a fourth side of the light guide; and a first side lens disposed between the first side of the light guide and the first light source, wherein the first side of the light guide is overlapped with the fourth side of the light guide in an optical-axis direction of the lens group, and the first side lens is in contact with the light guide.

The lens group may include first to N-th lenses, the first lens may be disposed farthest from the fourth side of the light guide, of which a side opposite to a side facing the fourth side is convex, the N-th lens may be disposed closest to the light guide, of which a side facing the fourth side of the light guide is concave, a side of the first side lens adjacent to the first light source may be convex, power of the first lens may be positive, power of the N-th lens may be negative, and composite power of lenses between the first lens and the N-th lens may be positive or negative.

The projection device may comprise: a second light source disposed on a second side of the light guide; a third light source disposed on a third side of the light guide; a second side lens disposed between the second side of the light guide and the second light source; and a third side lens disposed between the third side of the light guide and the third light source, wherein a side of the second side lens adjacent to the second light source may be convex, a side of the third side lens adjacent to the third light source may be convex, and the second side of the light guide may be disposed to face the third side of the light guide with the light guide interposed therebetween.

The first side lens may be in contact with the light guide, and a radius of curvature of the first side lens may be 100 mm or more on an optical axis of a side adjacent to the light guide.

The light guide and the first side lens may be in contact with each other by an adhesive.

The side surface of the light guide may be larger than or equal to a side of the first side lens adjacent to the light guide.

The side of the first side lens adjacent to the light guide may be a flat surface.

A projection device according to an embodiment comprises: N lenses and a first light source; a light guide disposed between the N lenses and the first light source; a first side lens disposed between the light guide and the first light source, wherein a side of a first lens disposed farthest from the light guide, among the N lenses, opposite to a side facing the light guide is convex, and a side of an N-th lens disposed closest to the light guide, facing the light guide, is concave.

The effective diameter of the first lens, among the N lenses, may be the largest, an effective diameter of the N-th lens, among the N lenses, may be the smallest, and an effective diameter of a lens disposed between the first lens and the N-th lens may be smaller than the effective diameter of the first lens and larger than the effective diameter of the N-th lens.

The first light source may be an RGB LED or a single-color LED, which is one among RGB.

The projection device may include: a second light source disposed on a second side of the light guide; and a third light source disposed on a third side of the light guide, wherein the second side of the light guide may be disposed to face the third side of the light guide.

The projection device may include: a second light guide disposed to face the first lens; and an aperture disposed in the second light guide.

The N-th lens may be in contact with the light guide.

A side of at least one of the N lenses, opposite to a side facing the light guide, is concave toward the light guide.

The length of the N lenses may be smaller than the length of the light guide.

In addition, a projection device according to an embodiment comprises: a plurality of lenses; a barrel having the plurality of lenses disposed thereon and including an opening part on a side surface; an optical signal generation unit disposed to be adjacent to the barrel to generate an optical signal including image information; and a light source device coupled to the barrel on the side surface of the opening, wherein the light source device includes a light source; and a housing having an opening formed therein to face the opening part, the barrel includes a barrel projection protruding toward the outside, the housing includes a housing projection protruding toward the outside, and the barrel projection at least partially penetrates the housing projection.

The housing protrusion may include a protrusion hole, and the barrel protrusion may be disposed inside the protrusion hole.

An area of the protrusion hole may be exposed.

The light source device may include a light source assembly disposed in the housing, and the light source assembly may include an assembly protrusion disposed inside the protrusion hole.

The assembly protrusion may face the barrel protrusion.

The assembly protrusion may be positioned in an exposed area of the protrusion hole.

The projection device may include a first light guide disposed in the barrel, and the light source device may include a second light guide disposed in the housing; and a light source for emitting light toward the second light guide.

The light source device may include a light source assembly surrounding the housing, the housing may include at least one housing hole corresponding to the second light guide, and the light source assembly may include an assembly hole corresponding to the at least one housing hole.

The assembly holes may be connected to each other.

The assembly hole may include a first assembly hole; a second assembly hole disposed outside the first assembly hole; and a third assembly hole disposed outside the second assembly hole.

The first assembly hole may be adjacent to the second light guide.

The assembly hole may be larger than the first assembly hole and the second assembly hole.

The barrel may include a first region, and a second region adjacent to the optical signal generation unit under the first region.

The light source device may include a light source assembly surrounding the housing, and the light source assembly may include a step unit formed in an area adjacent to the second region.

At least part of the optical signal generated by the optical signal generation unit may pass through or be reflected by the first optical guide.

### [Advantageous Effects]

In using a projection device used for Augmented Reality (AR) or the like and an electronic device including the same, the embodiment may implement a projection device and an electronic device, which can be miniaturized more easily by arranging a lens in a light guide to be closer than a light source.

In addition, it may implement a projection device with reduced TTL, and an electronic device.

In addition, it may implement a more compact projection device with improved optical uniformity, and an electronic device.

In addition, it may implement a projection device with improved resolution, and an electronic device including the same.

In addition, it may implement a projection device with improved reliability, and an electronic device including the same.

In addition, it may implement a projection device with improved coupling strength and assembly property, and an electronic device including the same.

In addition, it may implement a projection device easy to inspect and having improved coupling strength and durability, and an electronic device including the same.

The various and beneficial advantages and effects of the present invention are not limited to those described above, and will be more easily understood while explaining specific embodiments of the present invention.

### [Description of Drawings]

FIG. 1 is a conceptual view showing an embodiment of an AI device.
FIG. 2 is a block diagram showing the configuration of an extended reality electronic device according to an embodiment of the present invention.
FIG. 3 is a perspective view showing an augmented reality electronic device according to a first embodiment of the present invention.
FIGS. 4 to 6 are conceptual views for explaining various display methods applicable to a display unit according to an embodiment of the present invention.
FIG. 7 is a perspective view showing a projection device according to an embodiment.
FIG.8 is an exploded perspective view showing a projection device according to an embodiment.
FIG. 9 is a perspective view showing a barrel in a projection device according to an embodiment.
FIG. 10 is a side view showing a barrel in a projection device according to an embodiment.
FIG. 11 is a bottom view showing a barrel in which a light guide is inserted in a projection device according to an embodiment.
FIG. 12 is a view showing a barrel in a projection device according to an embodiment, which explains the combination of an outer lens, a first spacer, a light guide, a lens, and a second spacer.
FIG. 13 is a view explaining the combination of a barrel, a housing, and an additional housing in a projection device according to an embodiment.
FIG. 14 is a view explaining the combination of a housing and a light source unit in a projection device according to an embodiment.
FIG. 15 is a view showing an optical system of a projection device according to a first embodiment.
FIG. 16 is a view showing an optical system of a projection device according to a second embodiment.
FIG. 17 is a view showing an optical system of a projection device according to a third embodiment.
FIG. 18 is a conceptual view showing a projection device according to another embodiment.
FIG. 19 is a perspective view showing a projection device according to another embodiment.
FIG. 20 is an exploded perspective view showing a projection device according to another embodiment.
FIG. 21 is a view taken along line AA' in FIG. 19.
FIG. 22a is a side view showing a barrel in a projection device according to an embodiment.
FIG. 22b is another side view showing a barrel in a projection device according to an embodiment.
FIG. 22c is a cross-sectional view showing a barrel in a projection device according to an embodiment.
FIG. 23a is a side view showing a barrel and a housing in a projection device according to an embodiment.
FIG. 23b is another side view showing a barrel and a housing in a projection device according to an embodiment.
FIG. 23c is a cross-sectional view showing a barrel and a housing in a projection device according to an embodiment.
FIG. 24a is a side view showing a barrel, a housing, and a light source assembly in a projection device according to an embodiment.
FIG. 24b is another side view showing a barrel, a housing and a light source assembly in a projection device according to an embodiment.
FIG. 24c is a cross-sectional view showing a barrel, a housing, and a light source assembly in a projection device according to an embodiment.
FIG. 25 is an enlarged view showing part K1 in FIG. 21.
FIG. 26a is an enlarged view showing part K2 in FIG. 21.
FIG. 26b is a modified example of FIG. 26a.
FIG. 26c is another modified example of FIG. 26a.
FIG. 26d is still another modified example of FIG. 26a.

### [Mode for Invention]

Hereinafter, preferred embodiments of the present invention will be described in detail with reference to the accompanying drawings.

However, the technical spirit of the present invention is not limited to some of the described embodiments, but may be implemented in various forms different from each other, and within the scope of the technical spirit of the present invention, one or more of the components may be selectively combined or substituted and used among the embodiments.

In addition, terms (including technical and scientific terms) used in the embodiments of the present invention may be interpreted as a meaning that can be generally understood by those skilled in the art unless explicitly and specially defined and described, and the meaning of commonly used terms, such as the terms defined in a dictionary, may be interpreted in consideration of contextual meaning of related techniques.

In addition, the terms used in the embodiments of the present invention are for describing the embodiments and are not intended to limit the present invention.

In this specification, singular forms may also include plural forms unless specially stated otherwise in the phrase, and when it is described as " at least one (or one or more) among A, B, and C", it may include one or more of all combinations that can be combined using A, B, and C.

In addition, in describing the components of the embodiments of the present invention, terms such as first, second, A, B, (a), (b), and the like may be used.

These terms are intended only to distinguish one component from another, and are not intended to limit the nature, order, or sequence of the components.

In addition, when a component is described as being 'connected', 'combined', or 'linked' to another component, it may include the cases where the components are 'connected', 'combined', or 'linked' by another component disposed between the component and another component, as well as the cases where the component is directly 'connected', 'combined', or 'linked' to another component.

In addition, when described as being formed or disposed "on the top (above) or bottom (below)" of each component, the "top (above) or bottom (below)" includes the cases where one or more other components are formed or disposed between the two components, as well as the cases where the two components directly contact each other. In addition, when expressed as "on the top (above) or bottom (below)", it may include a meaning of the downward direction as well as the upward direction with respect to one component.

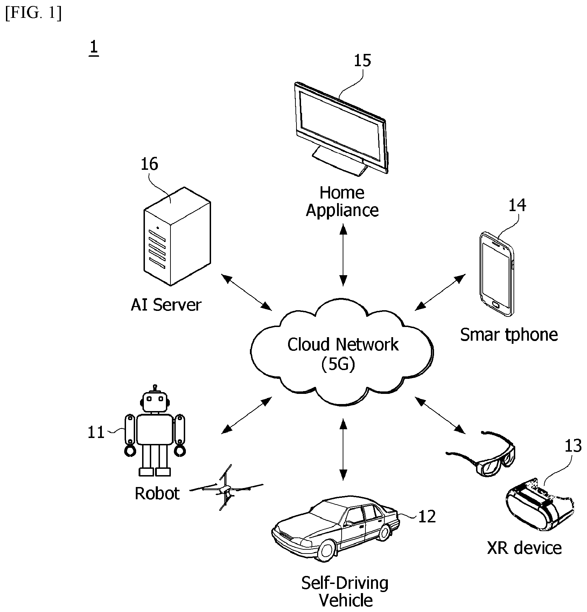

FIG. 1 is a conceptual view showing an embodiment of an AI device.

Referring to FIG. 1, in an AI system, at least one or more among an AI server 16, a robot 11, a self-driving vehicle 12, an XR device 13, a smartphone 14, and a home appliance 15 is connected to a cloud network 10. Here, a robot 11, a self-driving vehicle 12, an XR device 13, a smartphone 14, or a home appliance 15 to which AI technology is applied may be referred to as an AI device 11 to 15.

The cloud network 10 may mean a network that constitutes part of a cloud computing infrastructure or exists within a cloud computing infrastructure. Here, the cloud network 10 may be configured using a 3G network, a 4G or Long-Term Evolution (LTE) network, a 5G network, or the like.

That is, the devices 11 to 16 constituting an AI system may be connected to each other through the cloud network 10. In particular, the devices 11 to 16 may communicate with each other through a base station, and may also directly communicate with each other without going through a base station.

The AI server 16 may include a server that performs AI processing and a server that performs operations on big data.

The AI server 16 may be connected to at least one or more among a robot 11, a self-driving vehicle 12, an XR device 13, a smartphone 14, and a home appliance 15, which are AI devices constituting the AI system, through the cloud network 10, and may assist at least part of the AI processing of the connected AI devices 11 to 15.

At this point, the AI server 16 may train an artificial neural network according to a machine learning algorithm on behalf of the AI devices 11 to 15, and store or transmit the learning model in itself or to the AI devices 11 to 15.

At this point, the AI server 16 may receive input data from the AI devices 11 to 15, infer a result value of the received input data using the learning model, and generate and transmit a response or a control command to the AI devices 11 to 15 on the basis of the inferred result value.

Or, the AI devices 11 to 15 themselves may infer a result value of the input data using the learning model and generate a response or a control command the basis of the inferred result value.

### <AI + Robot>

The robot 11 may be implemented as a guide robot, a transport robot, a cleaning robot, a wearable robot, an entertainment robot, a pet robot, an unmanned flying robot, or the like by applying AI technology.

The robot 11 may include a robot control module for controlling operation, and the robot control module may mean a software module or a chip that implements the software module in hardware.

The robot 11 may acquire state information of the robot 11, detect (recognize) surrounding environments and objects, generate map data, determine a moving path and a driving plan, determine a response to a user interaction, or determine an operation using sensor information acquired from various types of sensors.

Here, the robot 11 may use the sensor information acquired from at least one or more sensors among a LiDAR, a radar, and a camera to determine the moving path and the driving plan.

The robot 11 may perform the operations described above using a learning model configured of at least one or more artificial neural networks. For example, the robot 11 may recognize surrounding environments and objects using a learning model, and determine an operation using the recognized surrounding environment information or object information. Here, the learning model may be learned by the robot 11 itself or learned by an external device such as the AI server 16 or the like.

At this point, although the robot 11 itself may perform an operation by generating a result using a learning model, it may perform an operation by transmitting sensor information to an external device such as the AI server 16 and receiving a result generated according thereto.

The robot 11 may determine a moving path and a driving plan using at least one or more among map data, object information detected from sensor information, and object information acquired from an external device, and control a driving unit to drive the robot 11 according to the determined moving path and driving plan.

The map data may include object identification information of various objects disposed in a space where the robot 11 moves. For example, the map data may include object identification information of fixed objects such as walls, doors, and the like, and movable objects such as flower pots, desks, and the like. In addition, the object identification information may include the name, type, distance, location, and the like.

In addition, the robot 11 may perform an operation or drive by controlling the driving unit on the basis of user's control/interaction. At this point, the robot 11 may acquire information on the intention of an interaction according to a user's motion or voice utterance, determine a response on the basis of the obtained intention information, and perform an operation.

### <AI + Self-driving>

The self-driving vehicle 12 may be implemented as a mobile robot, a vehicle, an unmanned aerial vehicle, or the like by applying AI technology.

The self-driving vehicle 12 may include a self-driving control module for controlling self-driving functions, and the self-driving control module may mean a software module or a chip that implements the software module in hardware. Although the self-driving control module may be included inside the self-driving vehicle 12 as a component, it may also be configured and connected as separate hardware outside the self-driving vehicle 12.

The self-driving vehicle 12 may acquire state information of the self-driving vehicle 12, detect (recognize) surrounding environments and objects, generate map data, determine a moving path and a driving plan, or determine an operation using sensor information acquired from various types of sensors.

Here, the self-driving vehicle 12 may use the sensor information acquired from at least one or more sensors among a LiDAR, a radar, and a camera to determine the moving path and the driving plan, like the robot 11.

In particular, the self-driving vehicle 12 may recognize environments or objects in a hidden area or an area farther than a predetermined distance by receiving sensor information from external devices, or may receive information recognized directly from the external devices.

The self-driving vehicle 12 may perform the operations described above using a learning model configured of at least one or more artificial neural networks. For example, the self-driving vehicle 12 may recognize surrounding environments and objects using a learning model, and determine a driving route using the recognized surrounding environment information or object information. Here, the learning model may be learned by the self-driving vehicle 12 itself or learned by an external device such as the AI server 16 or the like.

At this point, although the self-driving vehicle 12 itself may perform an operation by generating a result using a learning model, it may perform an operation by transmitting sensor information to an external device such as the AI server 16 and receiving a result generated according thereto.

The self-driving vehicle 12 may determine a moving path and a driving plan using at least one or more among map data, object information detected from sensor information, and object information acquired from an external device, and control a driving unit to drive the self-driving vehicle 12 according to the determined moving path and driving plan.

The map data may include object identification information of various objects disposed in a space (e.g., a road) where the self-driving vehicle 12 runs. For example, the map data may include object identification information of fixed objects such as streetlamps, rocks, buildings, and the like, and movable objects such as vehicles, pedestrians, and the like. In addition, the object identification information may include the name, type, distance, location, and the like.

In addition, the self-driving vehicle 12 may perform an operation or drive by controlling the driving unit on the basis of user's control/interaction. At this point, the self-driving vehicle 12 may acquire information on the intention of an interaction according to a user's motion or voice utterance, determine a response on the basis of the obtained intention information, and perform an operation.

### <AI + XR>

The XR device 13 may be implemented as a Head-Mount Display (HMD), a Head-Up Display (HUD) provided in a vehicle, a television, a mobile phone, a smartphone, a computer, a wearable device, a home appliance, digital signage, a vehicle, a fixed robot, a mobile robot, or the like by applying AI technology.

As the XR device 13 analyzes 3D point cloud data or image data acquired through various sensors or from external devices and generates location data and attribute data of three-dimensional points, it may acquire information on surrounding spaces or real objects, render XR objects to be output, and output the XR objects. For example, the XR device 13 may output an XR object including additional information on a recognized object to correspond to the recognized object.

The XR device 13 may perform the operations described above using a learning model configured of at least one or more artificial neural networks. For example, the XR device 13 may recognize real objects from three-dimensional point cloud data or image data using a learning model, and provide information corresponding to the recognized real object. Here, the learning model may be learned by the XR device 13 itself or learned by an external device such as the AI server 16 or the like.

At this point, although the XR device 13 itself may perform an operation by generating a result using a learning model, it may perform an operation by transmitting sensor information to an external device such as the AI server 16 and receiving a result generated according thereto.

### <AI + Robot + Self-driving>

The robot 11 may be implemented as a guide robot, a transport robot, a cleaning robot, a wearable robot, an entertainment robot, a pet robot, an unmanned flying robot, or the like by applying AI technology and self-driving technology.

The robot 11 to which the AI technology and the self-driving technology are applied may mean the robot itself having a self-driving function, or the robot 11 interacting with the self-driving vehicle 12.

The robot 11 having a self-driving function may generally refers to devices that move by themselves along a given path without control of a user, or determine a moving path by themselves and move along the path.

The robot 11 and the self-driving vehicle 12 having a self-driving function may use a common sensing method to determine one or more among a moving path and a driving plan. For example, the robot 11 and the self-driving vehicle 12 having a self-driving function may determine one or more among a moving path and a driving plan using information sensed through a LiDAR, a radar, or a camera.

The robot 11 interacting with the self-driving vehicle 12 may exist to be separate from the self-driving vehicle 12, and may be linked to the self-driving function inside or outside the self-driving vehicle 12 or perform operations associated with a user on the self-driving vehicle 12.

At this point, the robot 11 interacting with the self-driving vehicle 12 may control or assist the self-driving function of the self-driving vehicle 12 by acquiring sensor information on behalf of the self-driving vehicle 12 and providing it to the self-driving vehicle 12, or by acquiring sensor information, generating surrounding environment information or object information, and providing the information to the self-driving vehicle 12.

Or, the robot 11 interacting with the self-driving vehicle 12 may monitor the user on the self-driving vehicle 12 or control the functions of the self-driving vehicle 12 through interaction with the user. For example, when the driver is determined as being in a drowsy state, the robot 11 may activate the self-driving function of the self-driving vehicle 12 or assist control of the driving unit of the self-driving vehicle 12. Here, the functions of the self-driving vehicle 12 controlled by the robot 11 may include functions provided by a navigation system or an audio system provided inside the self-driving vehicle 12, in addition to the self-driving function.

Or, the robot 11 interacting with the self-driving vehicle 12 may provide information to the self-driving vehicle 12 or assist functions from the outside of the self-driving vehicle 12. For example, the robot 11 may provide the self-driving vehicle 12 with traffic information including signal information or the like, such as a smart traffic light or the like, or may interact with the self-driving vehicle 12 to automatically connect an electric charger to a charging port, like an automatic electric charger of an electric vehicle.

### <AI + Robot + XR>

The robot 11 may be implemented as a guide robot, a transport robot, a cleaning robot, a wearable robot, an entertainment robot, a pet robot, an unmanned flying robot, a drone, or the like by applying AI technology and XR technology.

The robot 11 to which the XR technology is applied may mean a robot that is a target of control/interaction within an XR image. In this case, the robot 11 may be separated from and linked to the XR device 13.

When the robot 11 that is a target of control/interaction within an XR image acquires sensor information from sensors including a camera, the robot 11 or the XR device 13 may generate an XR image based on the sensor information, and the XR device 13 may output the generated XR image. In addition, the robot 11 may operate based on a control signal input through the XR device, 13 or a user's interaction.

For example, a user may confirm an XR image corresponding to the viewpoint of a remotely connected robot 11 through an external device such as the XR device 13 or the like, and adjust the self-driving path of the robot 11, control the operation or driving, or confirm information on surrounding objects through interactions.

### <AI + Self-driving + XR>

The self-driving vehicle 12 may be implemented as a mobile robot, a vehicle, an unmanned aerial vehicle, or the like by applying AI technology and XR technology.

The self-driving vehicle 12 to which the XR technology is applied may mean a self-driving vehicle provided with a means for providing XR images, a self-driving vehicle that is a target of control/interaction within an XR image, or the like. In particular, the self-driving vehicle 12 that is a target of control/interaction within an XR image may be separated from and linked to the XR device 13.

The self-driving vehicle 12 provided with a means for providing XR images may acquire sensor information from sensors including a camera and output XR images generated on the basis of the acquired sensor information. For example, as the self-driving vehicle 12 is provided with a HUD and outputs XR images, passengers may be provided with XR objects corresponding to real objects or objects on the screen.

At this point, when an XR object is output to the HUD, at least a part of the XR object may be output to be overlapped with an actual object that the passenger gazes. On the other hand, when the XR object is output to a display provided inside the self-driving vehicle 12, at least a part of the XR object may be output to be overlapped with an object in the screen. For example, the self-driving vehicle 12 may output XR objects corresponding to objects such as a road, another vehicle, a traffic light, a traffic sign, a two-wheeled vehicle, a pedestrian, a building, and the like.

When the self-driving vehicle 12 that is a target of control/interaction within an XR image acquires sensor information from sensors including a camera, the self-driving vehicle 12 or the XR device 13 may generate an XR image based on the sensor information, and the XR device 13 may output the generated XR image. In addition, the self-driving vehicle 12 may operate based on a control signal input through an external device such as the XR device 13 or the like, or a user's interaction.

### [Extended Reality Technology]

Extended reality (XR) generally refers to virtual reality (VR), augmented reality (AR), and mixed reality (MR). VR technology provides objects, backgrounds, and the like of the real world only as CG images, AR technology also provides CG images virtually generated on real object images, and MR technology is a computer graphics technique that mixes and combines virtual objects in the real world.

The MR technology is similar to the AR technology in that it shows real objects and virtual objects together. However, there is a difference in that while the AR technology uses virtual objects to complement real objects, the MR technology uses virtual and real objects as equal characteristics.

The XR technology may be applied to Head-Mount Displays (HMD), Head-Up Displays (HUD), mobile phones, tablet PCs, laptops, desktops, TVs, digital signage, and the like, and the devices to which the XR technology is applied may be referred to as XR devices.

Hereinafter, an electronic device that provides extended reality according to an embodiment of the present invention will be described. In particular, a projection device applied to augmented reality and an electronic device including the same will be described in detail.

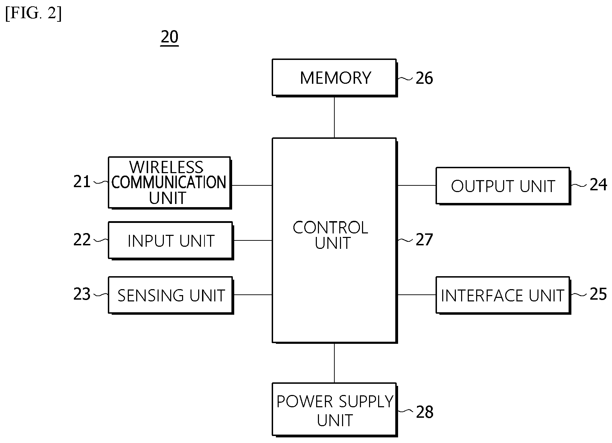

FIG. 2 is a block diagram showing the configuration of an extended reality electronic device 20 according to an embodiment of the present invention.

Referring to FIG. 2, the extended reality electronic device 20 may include a wireless communication unit 21, an input unit 22, a sensing unit 23, an output unit 24, an interface unit 25, a memory 26, a control unit 27, and a power supply unit 28. As the components shown in FIG. 2 are not essential for implementing the electronic device 20, the electronic device 20 described in this specification may have more or fewer components than the components listed above.

More specifically, among the components listed above, the wireless communication unit 21 may include one or more modules that allow wireless communication between the electronic device 20 and a wireless communication system, between the electronic device 20 and another electronic device, or between the electronic device 20 and an external server. In addition, the wireless communication unit 21 may include one or more modules that connect the electronic device 20 to one or more networks.

The wireless communication unit 21 may include at least one among a broadcast reception module, a mobile communication module, a wireless Internet module, a short-range communication module, and a location information module.

The input unit 22 may include a camera or an image input unit for inputting image signals, a microphone or an audio input unit for inputting audio signals, and a user input unit (e.g., a touch key, a mechanical key, etc.) for receiving information from a user. Voice data or image data collected by the input unit 22 may be analyzed and processed as a user's control command.

The sensing unit 23 may include one or more sensors for sensing at least one among information inside the electronic device 20, information about the surrounding environment surrounding the electronic device 20, and user information.

For example, the sensing unit 23 may include at least one among a proximity sensor, an illumination sensor, a touch sensor, an acceleration sensor, a magnetic sensor, a gravity sensor (G-sensor), a gyroscope sensor, a motion sensor, an RGB sensor, an infrared (IR) sensor, a finger scan sensor, an ultrasonic sensor, an optical sensor (e.g., a photographing means), a microphone, a battery gauge, an environmental sensor (e.g., a barometer, a hygrometer, a thermometer, a radiation detection sensor, a heat detection sensor, a gas detection sensor, etc.), and a chemical sensor (e.g., an electronic nose, a healthcare sensor, a biometric recognition sensor, etc.). Meanwhile, the electronic device 20 disclosed in the present specification may combine and utilize information sensed by at least two or more of these sensors.

The output unit 24 is for generating an output related to visual, auditory, or tactile sense, and may include at least one among a display unit, an audio output unit, a haptic module, and an optical output unit. The display unit may configure a layer structure together with a touch sensor or may be formed to be integrated with the touch sensor to implement a touch screen. The touch screen may provide an output interface between the augmented reality electronic device 20 and the user, while functioning as a user input means that provides an input interface between the augmented reality electronic device 20 and the user.

The interface unit 25 functions as a passage between various types of external devices connected to the electronic device 20. Through the interface unit 25, the electronic device 20 may receive virtual reality or augmented reality contents from external devices, and perform mutual interaction by exchanging various input signals, sensing signals, and data.

For example, the interface unit 25 may include at least one among a wired/wireless headset port, an external charger port, a wired/wireless data port, a memory card port, a port for connecting a device provided with an identification module, an audio Input/Output (I/O) port, a video Input/Output (I/O) port, and an earphone port.

In addition, the memory 26 stores data that supports various functions of the electronic device 20. The memory 26 may store a plurality of application programs (or applications) that operate on the electronic device 20, data for operation of the electronic device 20, and commands. At least some of the application programs may be downloaded from an external server through wireless communication. In addition, at least some of the application programs may exist in the electronic device 20 from the time of shipment for the basic functions of the electronic device 20 (e.g., incoming and outgoing call functions, incoming and outgoing message functions).

In addition to the operations related to the application programs, the control unit 27 generally controls the overall operation of the electronic device 20. The control unit 27 may process signals, data, information, and the like input or output through the components described above.

In addition, the control unit 27 may control at least some of the components by driving the application programs stored in the memory 26 to provide appropriate information to the user or process a function. Furthermore, the control unit 27 may operate at least two or more of the components included in the electronic device 20 in combination to drive the application programs.

In addition, the control unit 27 may detect movement of the electronic device 20 or the user using a gyroscope sensor, a gravity sensor, a motion sensor, or the like included in the sensing unit 23. Or, the control unit 27 may detect objects approaching near the electronic device 20 or the user using a proximity sensor, an illumination sensor, a magnetic sensor, an infrared sensor, an ultrasonic sensor, an optical sensor, and the like included in the sensing unit 23. In addition, the control unit 27 may detect movement of the user through sensors provided in a controller that operates in connection with the electronic device 20.

In addition, the control unit 27 may perform operations (or functions) of the electronic device 20 using the application programs stored in the memory 26.

The power supply unit 28 receives external power or internal power under the control of the control unit 27 and supplies the power to each of the components included in the electronic device 20. The power supply unit 28 includes a battery, and the battery may be provided in an embedded or swappable form.

At least some of the components may operate in cooperation with each other to implement the operation, control, or control methods of the electronic device according to various embodiments described below. In addition, the operation, control, or control methods of the electronic device may be implemented on the electronic device by driving at least one application program stored in the memory 26.

Hereinafter, the electronic device described as an example of the present invention will be described based on an embodiment applied to a Head Mounted Display (HMD). However, embodiments of the electronic device according to the present invention may include a mobile phone, a smartphone, a laptop computer, a digital broadcasting terminal, a personal digital assistant (PDA), a portable multimedia player (PMP), a navigation, a slate PC, a tablet PC, an Ultrabook, and a wearable device. In addition to the HMD, the wearable device may include a smart watch, contact lenses, VR/AR/MR Glass, and the like.

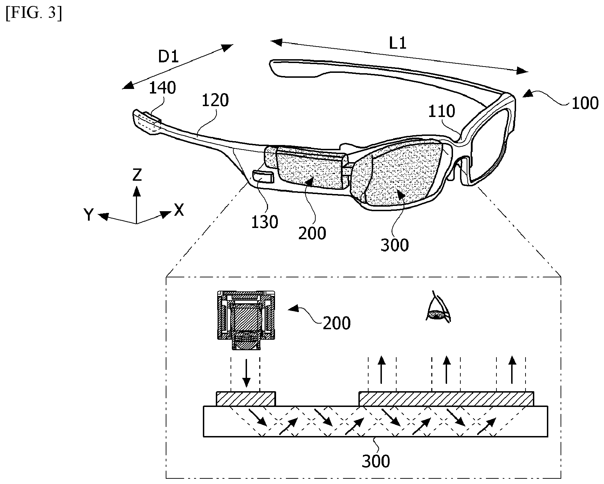

FIG. 3 is a perspective view showing an augmented reality electronic device according to an embodiment of the present invention.

As shown in FIG. 3, an electronic device according to an embodiment of the present invention may include a frame 100, a projection device 200, and a display unit 300.

The electronic device may be provided as a glass type (smart glasses). The glass type electronic device is configured to be worn on the head of a human body and may be provided with a frame (case, housing, etc.) 100 for this purpose. The frame 100 may be made of a flexible material to facilitate wearing.

The frame 100 is supported on the head and provides a space for mounting various components. As shown in the drawing, electronic components such as a projection device 200, a user input unit 130, an audio output unit 140, and the like may be mounted on the frame 100. In addition, a lens covering at least one of the left and right eyes may be detachably mounted on the frame 100.

The frame 100 may be formed in a shape of glasses worn on the face of a user's body as shown in the drawing, but it is not necessarily limited thereto, and may also be formed in the shape of goggles or the like worn on the face of a user to tightly contact.

The frame 100 like this may include a front-side frame 110 having at least one opening, and a pair of side surface frames 120 extended in the y direction (in FIG. 3) intersecting the front-side frame 110 to be parallel to each other.

The length DI in the x direction and the length LI in the y direction of the frame 100 may be the same or different.

The projection device 200 is provided to control various electronic components provided in the electronic device. The projection device 200 may be used interchangeably with an 'optical output device', an 'optical projection device', an 'optical radiation device', an 'optical device', or the like.

The projection device 200 may generate an image or a video of a series of images shown to the user. The projection device 200 may include an image source panel that generates images and a plurality of lenses for diffusing and converging light generated from the image source panel.

The projection device 200 may be fixed to any one side surface frame 120 among the two side surface frames 120. For example, the projection device 200 may be fixed to the inside or outside of any one of the side surface frames 120, or may be integrally formed to be embedded inside any one of the side surface frames 120. Or, the projection device 200 may be fixed to the front-side frame 110 or may be provided to be separate from the electronic device.

The display unit 300 may be implemented in the form of a head mounted display (HMD). The HMD refers to a display mounted on the head and directly show images in front of the user's eyes. When a user wears the electronic device, the display unit 300 may be disposed to correspond to at least one among the left and right eyes to directly provide images in front of the user's eyes. In this drawing, the display unit 300 is positioned in a portion corresponding to the right eye so that images may be output toward the user's right eye. However, as described above, it is not limited thereto and may be disposed to corresponding to both the left and right eyes.

The display unit 300 may allow an image generated by the projection device 200 to be seen to the user while the user visually recognizes the external environment simultaneously. For example, the display unit 300 may project an image in the display area using a prism.

In addition, the display unit 300 may be formed to be translucent so that the projected image and the general field of view in front (the range that the user sees through the eyes) may be seen simultaneously. For example, the display unit 300 may be semitransparent and formed of an optical element including glass.

In addition, the display unit 300 may be inserted in and fixed to an opening included in the front-side frame 110, or may be positioned on the back side of the opening (i.e., between the opening and the user) and fixed to the front-side frame 110. Although it is shown in the drawing as an example that the display unit 300 is positioned on the back side of the opening and fixed to the front-side frame 110, the display unit 300 may be disposed and fixed at various locations in the frame 100.

As shown in FIG. 3, when the projection device 200 inputs image light of an image into one side of the display unit 300, the electronic device may allow the image light to be emitted to the other side through the display unit 300 so that the image generated by the projection device 200 may be seen to the user.

Accordingly, the user may see the image generated by the projection device 200 while seeing the external environment through the opening of the frame 100 at the same time. That is, the image output through the display unit 300 may be seen to be overlapped with the general field of view. The electronic device may provide augmented reality (AR) that overlaps a virtual image on a real image or the background and shows the overlapped images as a single image using these display features.

Furthermore, in addition to these operations, images generated from the external environment and the projection device 200 may be provided to the user with a time difference for a short period of time that is not recognized by a person. For example, in one frame, the external environment may be provided to the person in one section, and images from the projection device 200 may be provided to the person in another section.

Or, both the overlap and time difference may be provided.

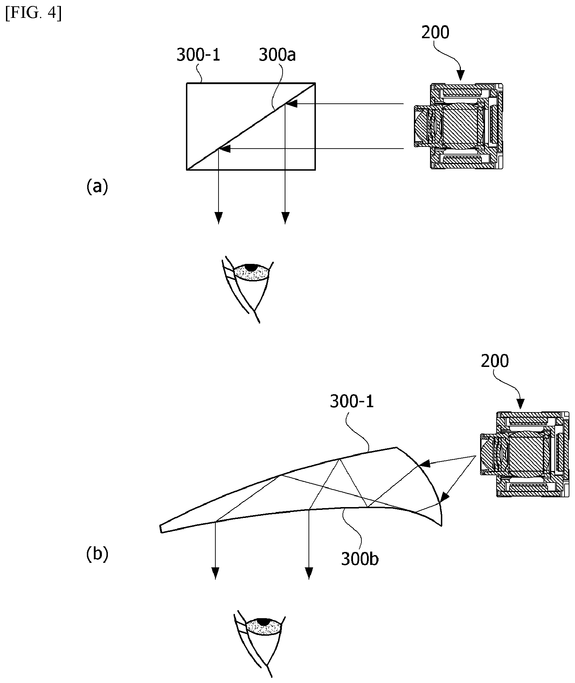

FIGS. 4 to 6 are conceptual views for explaining various display methods applicable to a display unit according to an embodiment of the present invention.

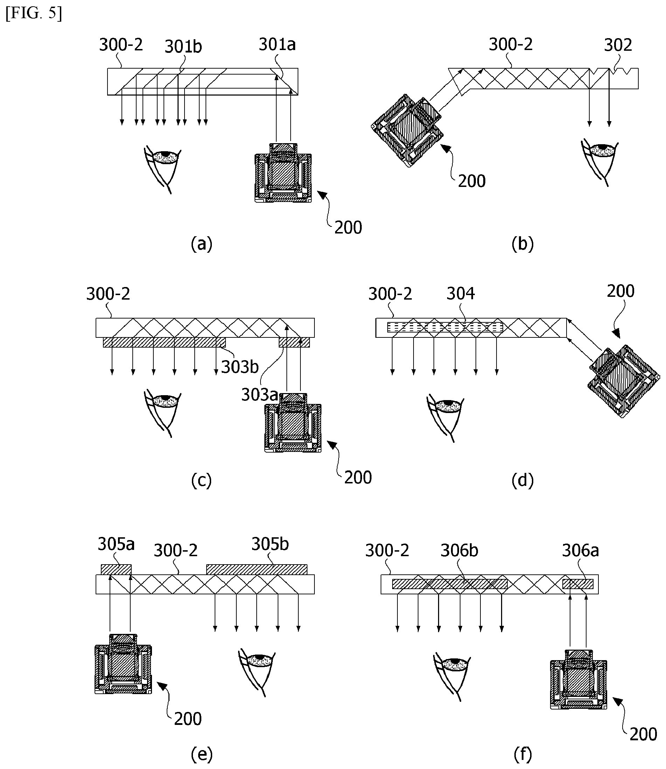

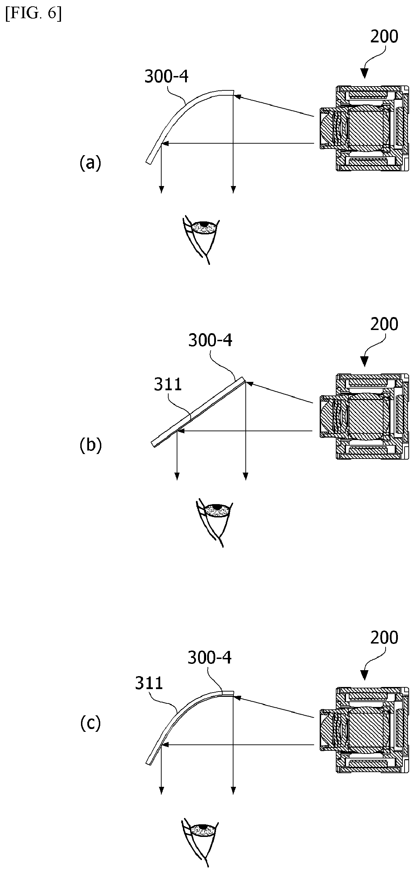

Specifically, FIG. 4 is a view for explaining an embodiment of a prism-type optical element, FIG. 5 is a view for explaining an embodiment of a waveguide-type optical element, and FIG. 6 is a view for explaining an embodiment of a surface reflection-type optical element.

As shown in FIG. 4, a prism-type optical element may be used in a display unit 300-1 according to an embodiment of the present invention.

As an embodiment, a flat-type glass optical element, in which the surface into which image light is input and the surface 300a from which image light is emitted are flat surfaces as shown in FIG. 4(a), or a freeform glass optical element, in which the surface 300b from which image light is emitted is formed as a curved surface without a predetermined radius of curvature as shown in FIG. 4(b), may be used as a prism-type optical element.

The flat-type glass optical element may receive image light generated by the projection device 200 through a flat side surface, reflect the image light using a total reflection mirror 300a provided therein, and emit the image light toward the user. Here, the total reflection mirror 300a provided inside the flat-type glass optical element may be formed inside the flat-type glass optical element by laser.

The freeform glass optical element may be configured to be thinner as it goes farther from the incident surface, and may receive image light generated by the projection device 200 through a side surface having a curved surface, totally reflect the image light inside thereof, and emit the image light toward the user.

As shown in FIG. 5, a waveguide-type optical element or a light guide optical element (LOE) may be used in a display unit 300-2 according to another embodiment of the present invention.

As an embodiment, the waveguide-type or light guide-type optical element may include a glass optical element of a partial reflection mirror (segmented beam splitter) type as shown in FIG. 5(a), a glass optical element of a sawtooth prism type as shown in FIG. 5(b), a glass optical element having a diffractive optical element (DOE) as shown in FIG. 5(c), a glass optical element having a hologram optical element (HOE) as shown in FIG. 5(d), a glass optical element having a passive grating as shown in FIG. 5(e), and a glass optical element having an active grating as shown in FIG. 5(f).

The glass optical element of a partial reflection mirror (segmented beam splitter) type as shown in FIG. 5(a) may be provided with a total reflection mirror 301a on the side where an optical image is input and a partial reflection mirror (segmented beam splitter) 301b on the side where the optical image is emitted.

Accordingly, the optical image generated by the projection device 200 may be totally reflected from the total reflection mirror 301a inside the glass optical element, and the totally reflected optical image is partially separated and emitted by the partial reflection mirror (segmented beam splitter) 301b while the light is guided along the length direction of the glass, and recognized by the user's eyes.

In the glass optical element of a sawtooth prism type as shown in FIG. 5(b), image light of the projection device 200 is input into the side surface of the glass in the diagonal direction, totally reflected inside the glass, emitted to the outside of the glass by the sawtooth-shaped unevenness 302 provided on the side from which the image light is emitted, and recognized by the user's eyes.

The glass optical element having a diffractive optical element (DOE) as shown in FIG. 5(c) may be provided with a first diffraction unit 303a on the surface into which the optical image is input and a second diffraction unit 303b on the surface from which the optical image is emitted. The first and second diffraction units 303a and 303b may be provided in the form of patterning a specific pattern on the surface of the glass or attaching a separate diffraction film.

Accordingly, the optical image generated by the projection device 200 is input and diffracted through the first diffraction unit 303a, totally reflected and guided along the length direction of the glass, and emitted through the second diffraction unit 303b, and recognized by the user's eyes.

The glass optical element having a hologram optical element (HOE) as shown in FIG. 5(d) may be provided with an out-coupler 304 inside the glass on the side from which the optical image is emitted. Accordingly, the optical image may be input from the projection device 200 in a diagonal direction through the side surface of the glass, totally reflected and guided along the length direction of the glass, emitted by the out-coupler 304, and recognized by the user's eyes. Such a hologram optical element may be further subdivided into a structure having a passive grating and a structure having an active grating by changing the structure slightly.

The glass optical element having a passive grating as shown in FIG. 5(e) may be provided with an in-coupler 305a on the surface opposite to the glass surface on the side where an optical image is input, and an out-coupler 305b on the surface opposite to the glass surface on the side where an optical image is emitted. Here, the in-coupler 305a and the out-coupler 305b may be provided in the form of a film having a passive grating.

Accordingly, the optical image input into the glass surface on the incident side of the glass may be totally reflected from the in-coupler 305a provided on the opposite surface, guided along the length direction of the glass, emitted through the surface on the opposite side of the glass by the out-coupler 305b, and recognized by the user's eyes.

The glass optical element having an active grating as shown in FIG. 5(f) may be provided with an in-coupler 306a formed as an active grating inside the glass on the side where an optical image is input, and an out-coupler 306b formed as an active grating inside the glass on the side where an optical image is emitted.

Accordingly, the optical image input into the glass may be totally reflected from the in-coupler 306a, guided along the length direction of the glass, emitted outside the glass by the out-coupler 306b, and recognized by the user's eyes.

A pin mirror type optical element may be used as a display unit according to a modified example.

In addition, as a plurality of flat surfaces each having a different incident angle of an optical image is formed as a single glass, a surface reflection-type optical element of a freeform combiner type as shown in FIG. 6(a) may use a freeform combiner glass formed to have an overall curved surface in order to perform a function as a combiner. In the freeform combiner glass 300, the optical image may enter each area at a different incident angle and output to the user.

A surface reflection-type optical element of a flat HOE type as shown in FIG. 6(b) may be provided with a hologram optical element (HOE) 311 coated or patterned on the surface of a flat glass, and an optical image input from the projection device 200 may pass through the hologram optical element 311, be reflected from the surface of the glass, pass through the hologram optical element 311 again, and be emitted toward the user.

A surface reflection-type optical element of a freeform HOE type as shown in FIG. 6(c) may be provided with a hologram optical element (HOE) 313 coated or patterned on the surface of a freeform glass, and the operating principle may be the same as described in FIG. 6(b).

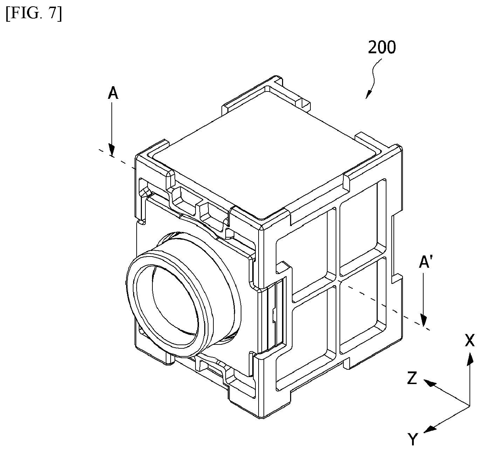

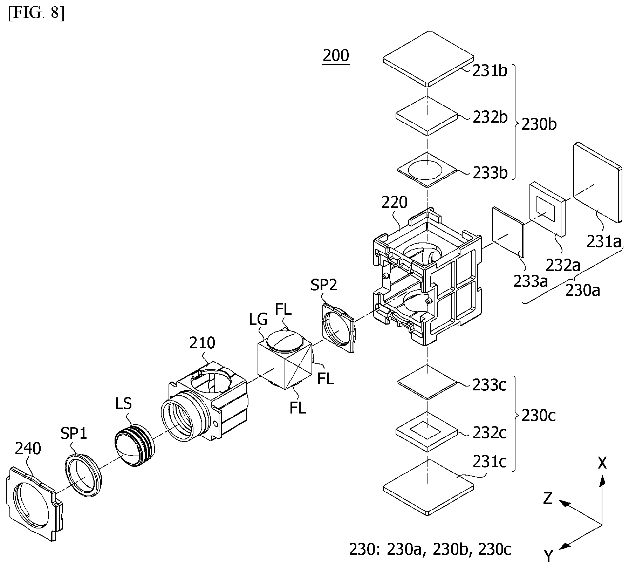

FIG. 7 is a perspective view showing a projection device according to an embodiment, and FIG.8 is an exploded perspective view showing a projection device according to an embodiment.

Referring to FIGS. 7 and 8, the projection device 200 according to an embodiment may include an outer lens LS, a barrel 210, a housing 220, a light source unit 230, a light guide LG, a lens FL, and an additional housing 240. In addition, the projection device 200 may include a first spacer SP1 and a second spacer SP2.

First, the outer lens LS may be inserted in the barrel 210. That is, the barrel 210 may be positioned inside the projection device 200 and accommodate the outer lens LS. In addition, the barrel 210 may accommodate the light guide LG, the lens LF, the first spacer PS1, and the second spacer SP2.

The barrel 210 may have a space for accommodating the components described above or additional optical elements. For example, the barrel 210 may include a first groove and a second groove described below. The outer lens LS may be disposed in the first groove. In addition, the light guide LG may be disposed in the second groove. In addition, the first groove and the second groove may be spaced apart from each other in the barrel 210. That is, the barrel 210 has spaces (e.g., grooves) in which the outer lens LS and the light guide LG are disposed, and these spaces may be separated or spaced apart from each other. Accordingly, insertion or combination of the outer lens and the light guide may be facilitated.

On the contrary, when the spaces are connected to each other, miniaturization of the projection device can be achieved.

The outer lens LS is accommodated in the barrel 210, and the first spacer SP1 may be positioned outside the outer lens LS. As the first spacer SP1 is disposed outside the outer lens LS that is accommodated in the first groove of the barrel 210, detachment of the outer lens LS can be prevented.

The barrel 210 may include a plurality of holes connected to the second groove. The plurality of holes may be positioned on the side surfaces of the barrel 210. Accordingly, light emitted from the light source unit 230 described below may enter the light guide LG. Furthermore, the light that has entered the light guide LG may be reflected and pass through or penetrate the outer lens LS to be provided to the waveguide or waveguide described above. To this end, the first groove and the second groove may be connected to each other through a penetration hole. That is, light reflected from the light guide LG in the second groove may be provided to the outer lens LS of the first groove through the penetration hole. In addition, as described above, light from the light source unit 230 may be emitted to the inner light guide LG through the plurality of holes disposed on the side surfaces of the barrel 210.

The light guide LG may be positioned within the barrel 210. The light guide LG may be connected to the lens FL described below.

The light guide LG may be configured of at least one prism. For example, the light guide LG may be configured by combining or bonding a plurality of prisms. The light guide LG may include a prism. The prism may include, for example, an X-prism as a reflection member. As an embodiment, the light guide LG may be a structure that combines at least two or more prisms. In addition, the light guide LG may be a non-polarizing prism. That is, the light guide LG may not polarize light emitted from the light sources 232a, 232b, and 232c.s

In addition, the light guide LG may include at least two or more coating surfaces (reflection members or reflection sheets). One of these at least two or more coating surfaces may reflect light of a first wavelength and light of a second wavelength, and transmit light of a third wavelength. That is, the coating surface may reflect light of a predetermined wavelength band. Accordingly, light of a desired wavelength band may be reflected from the light guide LG for each of lights emitted from the plurality of light sources 232a, 232b, 232c. For example, light passing through the light guide LG may be provided to the outer lens LS.

The lens FL may be connected to the light guide LG. The lens FL may be disposed to be adjacent to the light guide LG. For example, the lens FL may be in contact with the light guide. That is, the lens FL may be in contact with the light guide LG. In addition, the light guide LG may be in contact with the lens FL.

In addition, the lens FL may be combined with the light guide LG. In this case, the lens FL may be combined with the light guide LG through a bonding member or a coupling member. The bonding member or the coupling member may be positioned between the lens FL and the light guide LG.

The lens FL is positioned on the outer side surface of the light guide LG, and may be at least one or more. For example, the number of lenses FL may correspond to the number of light sources of the light source unit 230 described below. When the number of light sources is three, the number of lenses FL may also be three.

For example, the lens FL may include a first lens, a second lens, and a third lens in correspondence to the light sources. The first lens may correspond to the first light source unit. The second lens may correspond to the second light source unit. The third lens may correspond to the third light source unit. That is, the first to third lenses may receive light emitted from the first to third light source units, respectively.

The second spacer SP2 may be positioned inside the barrel 210. For example, the second spacer SP2 may be larger than the light guide LG or the lens FL. The second spacer SP2 may be positioned outside the light guide LG and the lens FL. Accordingly, the light guide LG and the lens FL may not be detached from the barrel 210. In other words, the second spacer SP2 may suppress separation of the light guide LG and the lens FL from the barrel 210.

The housing 220 may be positioned outside the barrel 210. The housing 220 may surround the barrel 210. For example, the housing 220 may be disposed to surround at least an area of the barrel 210. Furthermore, the housing 220 may include a space for accommodating a light source. In addition, the housing 220 may include at least one housing hole. A light source may be disposed inside the housing hole. In addition, light emitted from the light source may be provided to the lens FL and the light guide LG through the at least one housing hole. The housing 220 may be disposed outside the barrel 210 and include a space for accommodating the barrel 210 and the light source unit 230.

The light source unit 230 may be at least one or more. As described above, it will be described below based on three light source units. The light source unit 230 may include a first light source unit 230a, a second light source unit 230b, and a third light source unit 230c.

The first light source unit 230a may be overlapped with the outer lens LS in a second direction (Y-axis direction). The second direction (Y-axis direction) may correspond to the direction of light emitted from the projection device 200. That is, the second direction (Y-axis direction) may correspond to the direction in which the light emitted from the light source device 230 is reflected from the light guide LG and emitted to the display unit described above.

The second light source unit 230b and the third light source unit 230c may be positioned to face each other. Or, the second light source unit 230b and the third light source unit 230c may be positioned to oppose each other.

The second light source unit 230b and the third light source unit 230c may be overlapped in a first direction (X-axis direction). The first direction (X-axis direction) may be a direction perpendicular to the second direction (Y-axis direction). In addition, a third direction (Z-axis direction) may be a direction perpendicular to the first and second directions.

In addition, the first light source unit 230a may be positioned in an area between the second light source unit 230b and the third light source unit 230c. In addition, the directions of light emitted from the second light source unit 230b and the third light source unit 230c may be opposite to each other.

Each light source unit may include a substrate 231a, 231b, 231c, a light source 232a, 232b, 232c, and an optical element 233a, 233b, 233c.

Furthermore, the substrate 231a, 231b, 231c, the light source 232a, 232b, 232c, and the optical element 233a, 233b, 233c may be sequentially positioned inside the light source unit. That is, the optical element may be positioned to be adjacent to the light guide LG compared to the substrate and the light source.

The substrate 231a, 231b, 231c may be connected to light source 232a, 232b, 232c and transmit electrical energy so that the light source 232a, 232b, 232c may emit light.

The substrate 231a, 231b, 231c may be positioned at the outermost side of the housing 220.

In addition, the substrate 231a, 231b, 231c may include a first substrate 231a, a second substrate 231b, and a third substrate 231c. The first substrate 231a may be overlapped with the light guide LG in the second direction (Y-axis direction). The second substrate 231b and the third substrate 231c may be overlapped in the first direction (X-axis direction). In addition, the second substrate 231b and the third substrate 231c may be positioned to face each other in the housing 220. In addition, the first substrate 231a may be positioned in an area between the second substrate 231b and the third substrate 231c.

The light source 232a, 232b, 232c may emit light. For example, light emitted from the light source 232a, 232b, 232c may enter the light guide LG inside the housing 220. The light guide LG may be positioned inside the housing 220.

In addition, the light source 232a, 232b, 232c may be one or more. The light source 232a, 232b, 232c may include a first light source 232a, a second light source 232b, and a third light source 232c. In addition, the light source 232a, 232b, 232c may be disposed on each substrate.

That is, in the light source device 230, the light source 232a, 232b, 232c may be single or plural. For example, the light source 232a, 232b, 232c may be plural and includes a first light source 232a, a second light source 232b, and a third light source 232c. The first to third light sources 232a to 232c may emit light in the same direction or different directions. For example, the second light source 232b and the third light source 232c may be positioned to face each other. The second light source 232b and the third light source 232c may be positioned to be overlapped with each other in the first direction (X-axis direction). In addition, the light guide LG may be positioned between the second light source 232b and the third light source 232c. Accordingly, the light guide LG may be overlapped with the second light source 232b and the third light source 232c.

The first to third light sources 232a to 232c may emit light toward the light guide LG. In addition, the first light source 232a may be overlapped with the light guide LG in the second direction. Through the configuration like this, the projection device 200 may have a compact light source device 230.

In addition, each of the first light source 232a, the second light source 232b, and the third light source 232c may emit light of the same or different wavelength or color. For example, each of the first light source 232a, the second light source 232b, and the third light source 232c may emit red, green, or blue light.

The optical element 233a, 233b, 233c may be at least one or more. The optical element 233a, 233b, 233c may include a first optical element 233a, a second optical element 233b, and a third optical element 233c corresponding to the first light source 232a, the second light source 232b, and the third light source 232c, respectively. The first optical element 233a, the second optical element 233b, and the third optical element 233c may include a filter. In addition, the first optical element 233a, the second optical element 233b, and the third optical element 233c may include glass. The first optical element 233a, the second optical element 233b, and the third optical element 233c may filter light. Or, the first optical element 233a, the second optical element 233b, and the third optical element 233c may block, in an early stage, foreign substances entering the light source. In other words, the light sources can be protected.

The additional housing 240 may be disposed outside the barrel 210 to surround the barrel 210. The barrel 210 is combined with the housing 220 in various coupling methods, and the additional housing 240 may be combined with the housing 220. The additional housing 240 may also be combined with the barrel 210. Accordingly, the projection device 200 according to an embodiment may provide improved reliability.

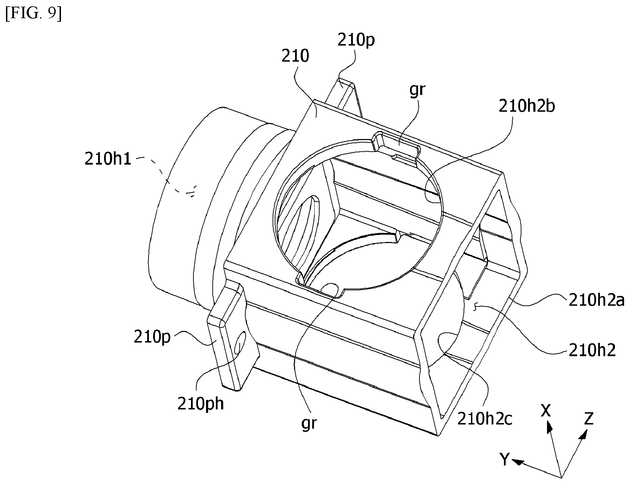

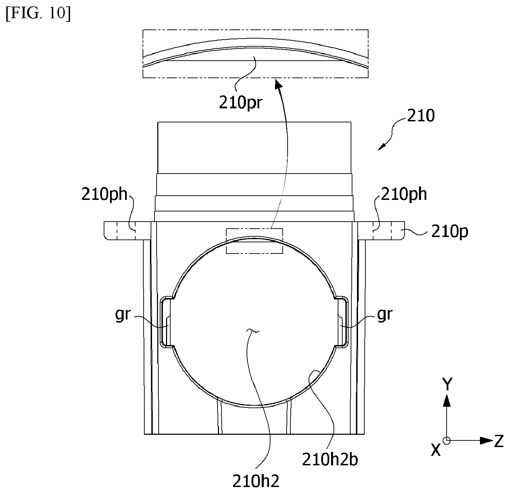

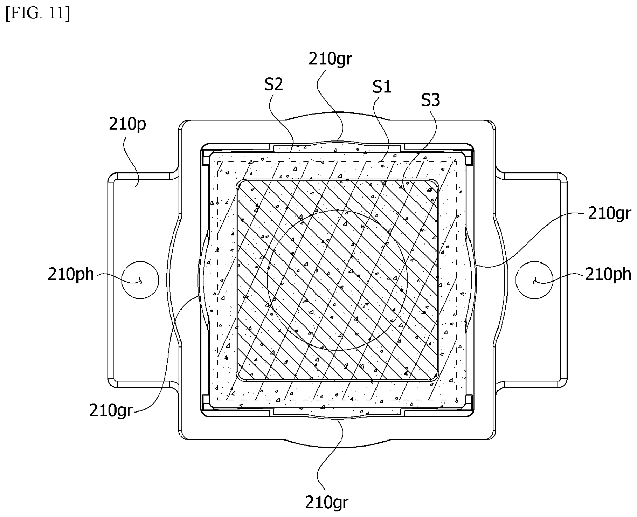

FIG. 9 is a perspective view showing a barrel in a projection device according to an embodiment, FIG. 10 is a side view showing a barrel in a projection device according to an embodiment, and FIG. 11 is a bottom view showing a barrel in which a light guide is inserted in a projection device according to an embodiment.

Further referring to FIGS. 9 to 11, in the projection device according to an embodiment, the barrel 210 may include a first groove 210h1 and a second groove 210h2 as described above. The first groove 210h1 and the second groove 210h2 may be overlapped in the second direction (Y-axis direction). Furthermore, the second groove 210h2 and the first groove 210h1 may be sequentially disposed along the second direction (Y-axis direction).

An outer lens may be disposed in the first groove 210h1. In addition, a light guide may be disposed in the second groove 210h2.

In addition, the first groove 210h1 and the second groove 210h2 may be spaced apart from each other in the second direction (Y-axis direction). In addition, the first groove 210h1 and the second groove 210h2 may be connected to each other through a penetration hole as described above. Accordingly, light reflected from the light guide in the second groove 210h2 may be provided to the outer lens in the first groove 210h1 and finally output to the display unit.

The barrel 210 may include protrusion units 210p extended toward the outside. The protrusion units 210p may include a coupling hole 210ph. They may be combined with the housing through the coupling holes 210ph.

The barrel 210 may include a plurality of barrel holes so that light emitted from a plurality of light sources may be provided to the light guide. The number of barrel holes may correspond to the number of light sources. For example, the barrel holes may include a first barrel hole 210h2a, a second barrel hole 210h2b, and a third barrel hole 210h2c. The first barrel hole 210h2a, the second barrel hole 210h2b, and the third barrel hole 210h2c may be disposed on the side surfaces of the barrel 210.

The first barrel hole 210h2a may be overlapped with the light guide along the second direction. The second barrel hole 210h2b and the third barrel hole 210h2c may be spaced apart from each other in the first direction (X-axis direction). In addition, the second barrel hole 210h2b and the third barrel hole 210h2c may be overlapped with each other in the first direction (X-axis direction). The first barrel hole 210h2a may be positioned between the second barrel hole 210h2b and the third barrel hole 210h2c.

Furthermore, the first barrel hole 210h2a, the second barrel hole 210h2b, and the third barrel hole 210h2c may be connected to the second groove 210h2. That is, the first barrel hole 210h2a, the second barrel hole 210h2b, and the third barrel hole 210h2c may be overlapped with the light guide in the first direction or the second direction.

In addition, the second barrel hole 210h2b and the third barrel hole 210h2c may include a grip groove gr formed at an edge. Accordingly, after the light guide is accommodated in the second groove 210h2, lenses (e.g., the second lens and the third lens) adjacent to the second barrel hole 210h2b and the third barrel hole 210h2c may be easily in contact with the light guide. For example, as a gripper or the like is positioned in the grip groove gr, the lens may be easily seated on the outer side surface of the light guide.

The protrusion units 210p may be extended toward the outside from an outer side surface of the barrel 210 other than the outer side surface where the second barrel hole 210h2b and the third barrel hole 210h2c are positioned. Accordingly, reliability of the barrel can be improved. In addition, manufacturing of the barrel may be facilitated.

In addition, the barrel 210 may include barrel grooves 210gr. The inner side surface of the second groove 210h2 in the barrel 210 may include barrel grooves 210hr convex toward the outside. Accordingly, the second spacer may be easily in contact with the inner side surface of the barrel 210.

In addition, the size S2 of the second groove 210h2 in the barrel 210 may be larger than the size S1 of the light guide LG. Accordingly, optical alignment or the like with respect to the light guide LG may be easily performed. In addition, the size will be described below based on the XZ plane.

In addition, the barrel 210 may include a barrel protrusion 210pr protruding toward the light guide LG on the inner side surface. The barrel protrusion 210pr may be overlapped with the second barrel hole 210h2b and the third barrel hole 210h2c in the first direction (X-axis direction).

The barrel protrusion 210pr may be in contact with the light guide LG. At this point, the size S1 of the light guide LG may be larger than the size S3 of the barrel protrusion 210pr. Or, the size S3 of the barrel protrusion 210pr may be smaller than the size S1 of the light guide LG. Accordingly, although the light guide LG is seated inside the barrel 210 and in contact with the barrel protrusion 210pr, the light guide LG may not be in contact with the inner side surface of the barrel 210. That is, the contact between the light guide LG and the inner side surface of the barrel 210 may be reduced to suppress damage to the light guide LG. In other words, reliability of the barrel 210 and the projection device can be improved.

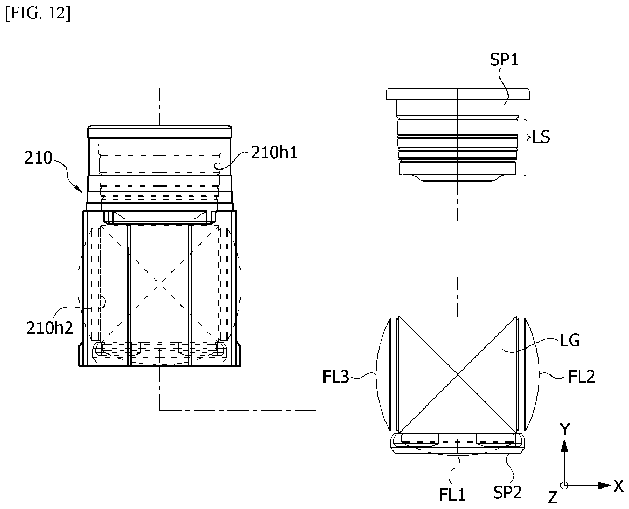

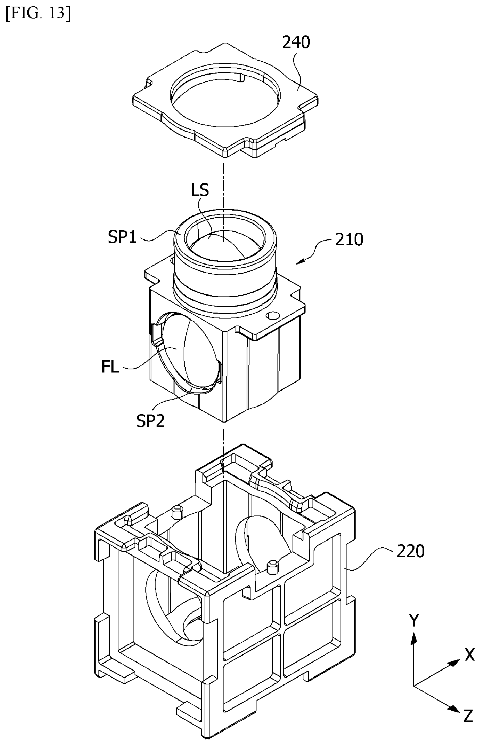

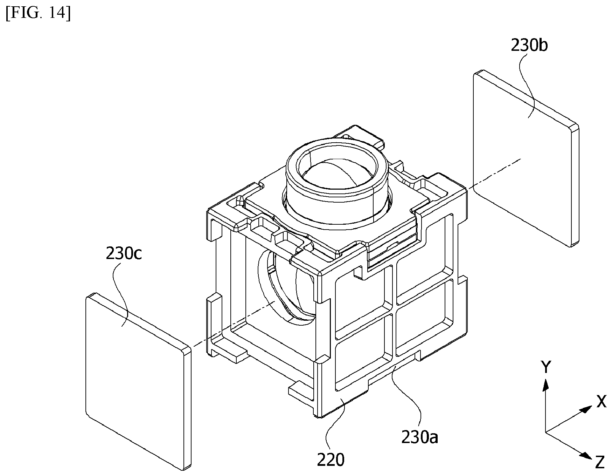

FIG. 12 is a view showing a barrel in a projection device according to an embodiment, which explains the combination of an outer lens, a first spacer, a light guide, a lens, and a second spacer, FIG. 13 is a view explaining the combination of a barrel, a housing, and an additional housing in a projection device according to an embodiment, and FIG. 14 is a view explaining the combination of a housing and a light source unit in a projection device according to an embodiment.

Referring to FIGS. 12 to 14, the outer lens LS may be inserted in the first groove 210h1 of the barrel 210. In addition, the first spacer SP1 may be positioned outside the outer lens LS that is inside the first groove 210h1 of the barrel 210. The first spacer SP1 is in contact with the outer lens LS and may suppress detachment of the outer lens LS as described above.

In addition, the light guide LG and the lenses FL1, FL2, FL3 connected to the light guide LG may be inserted in the second groove 210h2. The light guide LG and the lenses FL1, FL2, FL3 connected to the light guide LG may be positioned inside the second groove 210h2. In addition, the second spacer SP2 may be positioned outside the light guide LG and the lenses FL1, FL2, FL3 connected to the light guide LG. The second spacer SP2 may be in contact with the light guide LG or the lenses (particularly, a first guide lens FL1). Accordingly, detachment of the light guide LG and the lenses FL1, FL2, FL3 connected to the light guide LG may be suppressed.

The first spacer SP1 and the second spacer SP2 may be sequentially disposed along the second direction (Y-axis direction). The first spacer SP1 and the second spacer SP2 may be overlapped along the second direction (Y-axis direction). In addition, the outer lens LS, the light guide LG, and the first guide lens FL1 may be positioned between the first spacer SP1 and the second spacer SP2. Accordingly, the first spacer SP1 and the second spacer SP2 may be overlapped with the outer lens LS, the light guide LG, and the first guide lens FL1 in the second direction (Y-axis direction).

In addition, the barrel 210 may be inserted in the housing 220. That is, the barrel 210 may be positioned in the accommodation hole of the housing 220. Furthermore, the housing 220 and the barrel 210 may be combined in various coupling methods. For example, the protrusion of the housing 220 and the coupling hole of the barrel 210 may be combined with each other. Furthermore, the housing 220 may be positioned at the lower part the barrel 210, and the additional housing 240 may be positioned at the upper part of the barrel 210. Through the additional housing 240, the barrel 210 may maintain an improved coupling strength with the housing 220.

In addition, after the barrel 210 is accommodated in the housing 220, a plurality of light source units may be inserted in the side surfaces of the housing 220. For example, the first light source unit 230a, the second light source unit 230b, and the third light source unit 230c may be positioned on the side surfaces of the housing 220.

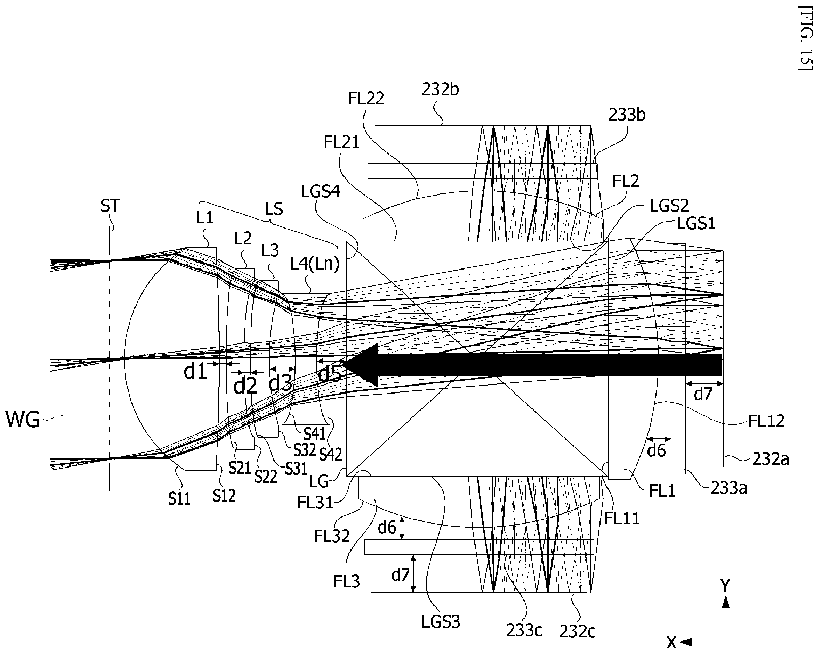

FIG. 15 is a view showing an optical system of a projection device according to a first embodiment.

Referring to FIG. 15, in the projection device according to a first embodiment, the optical system may include an outer lens LS, a light guide LG, optical elements 233a, 233b, 233c, and a lens FL. Furthermore, in the projection device, the optical system may further include light sources 232a, 232b, 232c.

In addition, the outer lens LS may include N lenses. In addition, the N lenses may include a first lens L1, a second lens L2, a third lens L3, and a fourth lens L4 in a sequence adjacent to the waveguide WG.

In addition, the light guide LG may be a hexahedron shape. Accordingly, the light guide LG may include a first side surface or a first side LGS1 facing the first light source 232a. The light guide LG may include a second side surface or a second side LGS2 facing the second light source 232b. The light guide LG may include a third side surface or a third side LGS3 facing the third light source 232c. The light guide LG may include a fourth side surface or a fourth side LGS4 facing the fourth lens L4 or the n-th lens Ln. In addition, the first to fourth sides may mean directions other than the side surfaces. For example, the first light source 232a may be positioned on the first side of the light guide LG.

In addition, the light source side may be a direction from the light guide LG toward the light. Although it is shown in the drawing that the light source side is a direction toward the first light source, the light source side may correspond to a direction toward a light source adjacent to a corresponding component for the first to third side lenses and the first to third optical elements. For example, the light source side for the second side lens or the second optical element corresponds to a direction toward the second light source 232b.

Furthermore, the lenses FL1 to FL3 may include a first side lens FL1, a second side lens FL2, and a third side lens FL3. The first guide lens described above may correspond to the first side lens FL1. Furthermore, the first side lens may be used interchangeably with 'lens', 'guide lens', or the like.

In addition, a target side may correspond to a direction from the light guide WG toward the waveguide WG. Or, the target side may correspond to a direction from each light source toward the waveguide WG with respect to the moving path of light.

In addition, the first side LGS1 and the fourth side LGS4 of the light guide LG may be opposite to or face each other. In addition, the second side LGS2 and the third side LGS3 of the light guide LG2 may be opposite to or face each other.

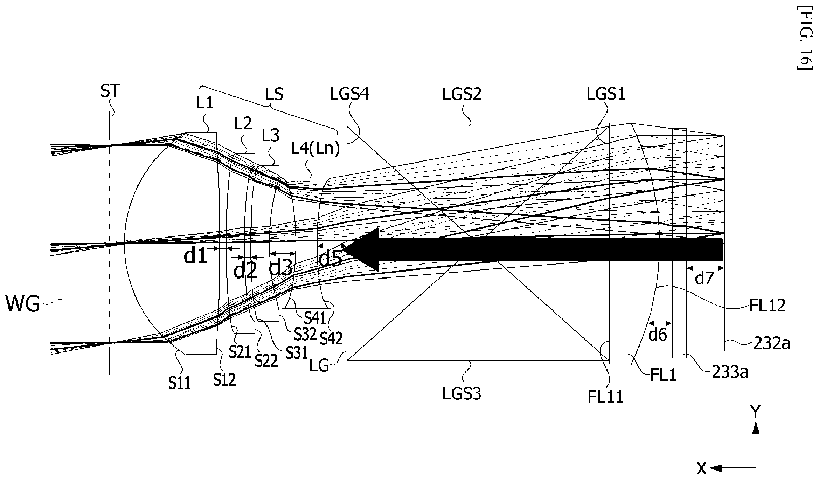

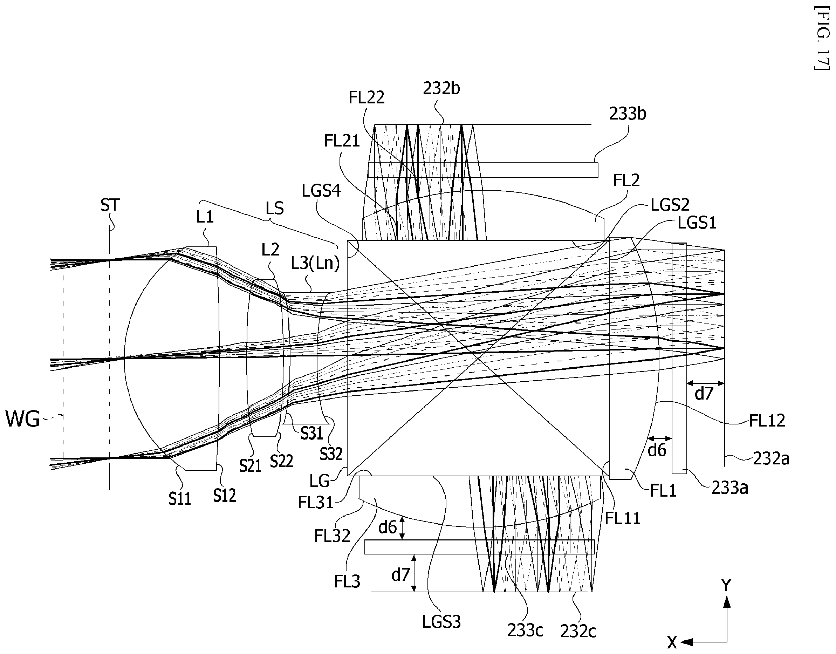

For example, the outer lens LS may include three or four lenses. As shown in FIG. 17, the outer lens LS includes three lenses and may be configured of first to third lenses L1 to L3. At this point, the N-th lens corresponds to the third lens L3. In addition, as shown in FIGS. 15 and 16, the outer lens LS includes four lenses and may be configured of first to fourth lenses L1 to L4. At this point, the N-th lens Ln corresponds to the fourth lens L4.

In addition, the lenses FL may be disposed in the light guide LG. For example, the lenses FL may be in contact with the light guide LG. The number of these lenses FL may correspond to the number of light sources. For example, the number of lenses FL may be three when there are three light sources. In addition, the number of lenses FL may be one when there is one light source.

In addition, hereinafter, the lens FL may be referred to as a 'light source lens' or a 'side lens'. The lens FL may include a first side lens FL1, a second side lens FL2, and a third side lens FL3. The first side lens FL1 may be positioned in an area between the second side lens FL2 and the third side lens FL3. However, the first side lens FL1 may not be overlapped with the second side lens FL2 and the third side lens FL3 in the second direction (Y-axis direction). The first side lens FL1 may be disposed to be misaligned with the second side lens FL2 and the third side lens FL3 in the second direction (Y-axis direction). Furthermore, the first side lens FL1 may be overlapped with the light guide LG in the first direction (X-axis direction). For example, the first side lens FL1 may be overlapped with the light guide LG in the light emission direction of the first light source 232a.

In addition, the optical element 233a, 233b, 233c may be disposed between the light source and the light guide LG. For example, the optical element may include a first optical element 233a, a second optical element 233b, and a third optical element 233c. In addition, the light source may include a first light source 232a, a second light source 232b, and a third light source 232c.

The first optical element 233a may be disposed between the first light source 232a and the first side lens FL1. The second optical element 233b may be disposed between the second light source 232b and the second side lens FL2. The third optical element 233c may be disposed between the second light source 232c and the third side lens FL3.

The first optical element 233a may be disposed between the second optical element 233b and the third optical element 233c. The first optical element 233a may not be overlapped with the second optical element 233b and the third optical element 233c in the second direction (Y-axis direction). The first optical member 233a may be disposed to be misaligned with the second optical element 233b and the third optical element 233c in the second direction.

Accordingly, light emitted from the first light source 232a may be provided to the waveguide WG via the first optical element 233a, the first side lens FL1, the light guide LG, and the outer lens LS. Light emitted from the second light source 232b may be provided to the waveguide WG via the second optical element 233b, the second side lens FL2, the light guide LG, and the outer lens LS. Light emitted from the third light source 232c may be provided to the waveguide WG via the third optical element 233c, the third side lens FL3, the light guide LG, and the outer lens LS.

In addition, the first lens L1 may include a first surface S11 or a first target surface S11 which is a surface on the side of the waveguide WG. In addition, the first lens L1 may include a second surface S12 or a second target surface S22 which is a surface on the side of the light guide LG. The second lens L2 may include a third surface S31 or a third target surface S21 which is a surface on the side of the waveguide WG. The second lens L2 may include a fourth surface S22 or a fourth target surface S22 which is a surface on the side of the light guide LG. The third lens L3 may include a fifth surface S31 or a fifth target surface S31 which is a surface on the side of the waveguide WG. The third lens L3 may include a sixth surface S32 or a sixth target surface S32 on the side of the light guide LG. In addition, the fourth lens L4 may include a seventh surface S41 or a fourth target surface S41 on the side of the waveguide WG. The fourth lens L4 may include an eighth surface S42 or an eighth target surface S42 on the side of the light guide LG. In addition, light from a plurality of light sources may be reflected from the light guide, pass through the outer lens LS, and be radiated toward the aperture ST or the waveguide WG. Although it will be described in the drawing on the assumption that light emitted from the first light source 232a passes through the light guide LG and is provided to the waveguide, it should be understood that light emitted from other light sources (second and third light sources) is also reflected from the light guide LG and radiated toward the waveguide or the like as described above.

Hereinafter, in various embodiments of the present invention, it will be described on the basis of the contents described above. Furthermore, the contents described below may be applied equally, except the contents that are inconsistent with the contents described in other embodiments.

In the optical system of the projection device according to a first embodiment, the first light source 232a may be disposed on the first side of the light guide LG. In addition, the outer lens LS may be disposed on the fourth side of the light guide LG.

In addition, the first side lens FL1 may be positioned between the first side LGS1 of the light guide LG and the first light source 232a. As an embodiment, the first side LGS1 of the light guide LG may be overlapped with the fourth side LGS4 of the light guide LG in the optical-axis direction of the outer lens LS or the first direction (X-axis direction). In other words, the first side LGS1 and the fourth side LGS4 of the light guide LG may be overlapped in the first direction and face each other.

In present embodiment, the first side lens FL1 may be in contact with the light guide LG. For example, the first side lens FL! may be boned to the first side LGS1 of the light guide LG by a bonding member or the like, or may be formed integrally.

In addition, as described above, the outer lens LS may include first to N-th lenses L1 to Ln. As an embodiment, the outer lens LS may include first to fourth lenses L1 to L4. In addition, the first lens L1 may be disposed farthest from the fourth side LGS1 of the light guide LG. In addition, the fourth lens L4 may be disposed closest to the fourth side LGS1 of the light guide LG. In other words, the length between the fourth side LGS1 and the first lens L1 in the first direction (X-axis direction) may be greater than the length d4 between the fourth side LGS1 and the fourth lens L4 in the first direction (X-axis direction). Furthermore, the third lens L3 and the second lens L2 may be disposed between the first lens L1 and the fourth lens L4 in the first direction. For example, the third lens L3 may be positioned between the second lens L2 and the fourth lens L4. In addition, the second lens L2 may be disposed between the first lens L1 and the third lens L3.

As an embodiment, a side of the first lens L1 opposite to a side facing the fourth side LGS4 of the light guide LG may be convex. That is, the first lens L1 may be convex in the first direction (X-axis direction). Conversely, the first lens L1 may be concave in a direction opposite to the first direction. In other words, the first surface S11 of the first lens L1 may be concave toward the fourth side LGS4. In addition, the first lens L1 may be convex toward the waveguide WG. Accordingly, light or rays collected by the light guide LG may be easily guided to the light guide plate or the waveguide WG. In other words, the collected light may be efficiently diffused.

In addition, the N-th lens, the last lens, or the fourth lens L4 is disposed to be adjacent to the light guide LG, and the surface facing the fourth side LGS4 may be concave. That is, the eighth surface S42 may be concave toward the light guide LG. In addition, the eighth surface S42 may be convex toward the waveguide WG.

The seventh surface S43 may be convex toward the light guide LG. In addition, the seventh surface S43 may be concave toward the waveguide or in the first direction.

In addition, the fifth surface S31 may be convex in the first direction. Or, the fifth surface S31 may be concave toward the light guide LG. The sixth surface S32 may be convex in the first direction or toward the waveguide. In addition, the sixth surface S32 may be convex in the first direction or toward the waveguide. Or, the sixth surface S32 may be concave toward the light guide LG.

The third surface S21 may be convex in the first direction or toward the waveguide. Or, the third surface S3 may be concave toward the light guide LG.

In addition, the fourth surface S22 may be convex in the first direction or toward the waveguide. Or, the fourth surface S22 may be concave toward the light guide LG.

In addition, the first surface S11 may be convex toward the waveguide or in the first direction as described above. In addition, the second surface S12 may be convex toward the light guide LG. Or, the second surface S12 may be concave in the first direction or toward the waveguide.

Furthermore, in an embodiment, the surface of the first side lens FL1 adjacent to the first light source 232a may be convex. In other words, the surface of the first side lens FL1 on the side of the first light source 232a may be convex toward the first light source 232a. Furthermore, the surface of the first side lens FL1 on the side of the first light source 232a may be concave in the first direction.

Furthermore, in an embodiment, the refractive power or power of the first lens L1 may be positive. In addition, the power or refractive power of the N-th lens Ln or the fourth lens Ln may be negative.

The composite power of the lenses disposed between the first lens L1 and the N-th lens Ln may be positive or negative. That is, the composite power of the second lens L2 and the third lens L3 may be positive or negative.

Furthermore, the second light source 232b may be disposed on the second side of the light guide LG. In addition, the third light source 232c may be disposed on the third side of the light guide LG. In addition, as described above, the second side lens FL2 may be disposed between the second side LGS2 of the light guide LG and the second light source 232a. In addition, the third side lens FL3 may be disposed between the third side LGS3 of the light guide LG and the third light source 232c.

At this point, the surface of the second side lens FL2 adjacent to the second light source 232b may be convex. In addition, the surface of the third side lens FL3 adjacent to the third light source 232c may be convex. That is, in an embodiment, the surfaces of the first to third side lenses FL1 to FL3 facing each light source may be convex toward the light source that emits light to each side lens.

The second side LGS2 of the light guide LG may be disposed to face the third side LGS3 of the light guide LG with the light guide LG interposed therebetween. Accordingly, the second side lens FL2 and the third side lens FL3 may be disposed to face or to be symmetrical with respect to the light guide LG.

In addition, each side lens may be in contact with the light guide LG. For example, the first side lens FL1 may be in contact with or in touch with the light guide LG. In addition, the second side lens FL2 may be in contact with or in touch with the light guide LG. In addition, the third side lens FL3 may be in contact with or in touch with the light guide LG.

In addition, the radius of curvature of the first side lens FL1 may be 100 mm or more on the optical axis of the surface adjacent to the light guide LG. The optical axis may correspond to the central axis of light emitted to the light guide through each light source. The radius of curvature of the second side lens FL2 may be 100 mm or more on the optical axis of the surface adjacent to or contacting the light guide LG. In addition, the radius of curvature of the third side lens FL3 may be 100 mm or more on the optical axis of the surface adjacent to or contacting the light guide LG.

In addition, as described above, each side lens may be combined with the light guide LG by a contact member or a bonding member. The bonding member may be made of a transparent material and have a refractive index similar to that of the light guide LG or the side lens. That is, the bonding member may be positioned between the light guide LG and one among the first to third side lenses FL1 to FL3.

The size of the side surface of the light guide LG may be equal to or larger than that of the surface of each side lens adjacent to the light guide LG. At this point, although the size of the side surface of the light guide LG is different from the size of the bonding surface F11, F21, F31 of each side lens contacting the light guide, the length in one direction (the first direction, the second direction, or the third direction) may be greater or smaller. For example, the length of the side surface of the light guide LG in one direction (the first direction, the second direction, or the third direction) may be smaller than the length of the side lens (one among the first to third side lenses) in one direction (the first direction, the second direction, or the third direction). For example, the length in two directions of the side surface of the light guide LG may be greater than the length in two directions of the bonding surface of each side surface. In addition, the length in one direction of the side surface of the light guide LG may be smaller than the length in one direction of the bonding surface of the side lens.

In addition, as an embodiment, each side surface adjacent to the light guide LG or the bonding surface F11, F21, F31 may be a flat surface. For example, the surface of the first side lens FL1 adjacent to the light guide LG or the bonding surface F11 perpendicular to the first direction may be a flat surface .

Furthermore, the light guide LG may be positioned between the outer lens LS or the N lenses and each light source (the first light source).

In addition, the effective diameter of the first lens 232a according to an embodiment may be the largest. That is, the effective diameter of the first lens L1 closest to the waveguide WG among the N lenses may be the largest. In addition, the effective diameter of the N-th lens (the fourth lens) among the N lenses may be the smallest.

In addition, the effective diameter of the lens disposed between the first lens L1 and the N-th lens (the fourth lens) may smaller than that of the first lens L1. In addition, the effective diameter of the lens disposed between the first lens L1 and the N-th lens (the fourth lens) may be larger than that of the N-th lens Ln (or the fourth lens, L4).

The waveguide WG may be disposed to face the first lens L1 as described above. That is, the waveguide WG may be positioned to be adjacent to the first lens L1. Furthermore, an aperture ST may be disposed in the waveguide WG. For example, the aperture ST may be positioned in the direction from the first lens L1 toward the waveguide. In addition, the aperture ST may be positioned to be adjacent to the first lens L1. The aperture ST may be positioned in correspondence to a contact point between the projection device and the waveguide WG.

In addition, as an embodiment, the surface of at least one of the N lenses, which is opposite to the surface facing the light guide, may be concave toward the light guide LG. For example, the surfaces S22, S32, S42 of the second to fourth lenses adjacent to the light guide LG may be concave toward the light guide LG.

In addition, the length in the first direction (X-axis direction) of the N lenses may be smaller than the length in the first direction of the light guide LG.

In addition, the light guide LG and the N-th lens or the fourth lens may be spaced apart from or in contact with each other. For example, the light guide LG and the N-th lens (fourth lens) may be combined with each other. Accordingly, flare can be reduced in the optical system.

In addition, as the surface of the fourth lens L4 or the N-th lens adjacent to the light guide LG (the eighth surface) is convex toward the waveguide as described above, the length of the outer lens LS may be reduced. That is, when the waveguide is placed toward the object side and the light source is placed toward the top, TTL of the optical system can be reduced. Accordingly, miniaturization of the optical system or the projection device may be easily achieved.

Furthermore, the contents shown below in Table 1 may be applied to each component of the optical system according to an embodiment.

**[Table 1]**

| Com pone nts | Ap ertu re | First lens | | Second lens | | Third lens | | Fourth lens | | Lig ht gui de | Side lens (FL) | | Optical element (Filter) | |
|---|---|---|---|---|---|---|---|---|---|---|---|---|---|---|
| Thic kness | 0.2 | 1. 45 2 | 0. 10 3( d1 ) | 0.28 | 0.08( d2) | 0. 28 | 0.42 (d3) | 0.3 | 0.47 (d5) | 4 | 0.76 7 | 0.2( d6) | 0.21 | 0.575 4498 22(d7 ) |
| Y Radi us | | 1. 97 47 45 97 6 | - 10 .0 13 23 39 1 | 12.8 093 8434 | 10.32 12167 4 | 4. 25 05 59 37 3 | 2.17 693 847 1 | - 5.65 445 802 | 2.41 973 443 | infi nity | infi nity | - 4.22 183 270 1 | INF | infini ty |
| Coni c Cons tant (K) | | 0. 45 64 38 35 7 | 18 .1 81 79 72 4 | - 64.0 864 894 9 | 53.32 85642 7 | 10 .2 80 46 21 7 | 2.42 405 031 9 | - 71.5 673 763 | 1.14 608 986 4 | | | | | |
| 4th Orde r Coeff icient (A) | | 0. 00 67 90 08 8 | 0. 01 35 90 40 3 | - 0.03 476 214 5 | - 0.123 67470 3 | 0. 21 02 34 36 9 | - 0.18 781 047 4 | - 0.12 052 725 8 | 9.27 E-14 | | | | | |
| 6th Orde r Coeff icient (B) | | 0. 00 21 63 93 6 | 0. 00 01 28 30 3 | 0.03 994 007 8 | 0.243 85519 9 | 0. 26 83 00 83 3 | 0.02 960 362 | 0.00 018 648 2 | - 9.38 E-14 | | | | | |
| 8th Orde r Coeff icient (C) | | 0. 00 14 22 49 9 | 4. 82 E-07 | - 0.00 755 259 7 | - 0.309 40077 6 | 0. 27 40 18 49 7 | - 0.00 353 440 6 | - 1.79 E-07 | 8.48 E-13 | | | | | |
| 10th Orde r Coeff icient (D) | | 0. 00 10 27 08 8 | 2. 59 E-09 | 0.00 071 106 6 | 0.402 59379 6 | 0. 20 56 47 96 2 | 0.00 033 940 2 | 1.72 E-10 | - 3.97 E-12 | | | | | |
| 12th Orde r Coeff icient (E) | | - 0. 00 03 63 12 | - 3. 84 E-11 | - 3.89 E-05 | - 0.441 88969 4 | 0. 08 76 13 20 5 | - 2.09 E-05 | - 1.95 E-10 | 1.07 E-11 | | | | | |
| 14th Orde r Coeff icient (F) | | 6. 46 E-05 | 8. 83 E-14 | 1.29 E-06 | 0.361 24789 6 | 0. 02 13 21 01 5 | 7.59 E-07 | 3.28 E-10 | - 1.74 E-11 | | | | | |
| 16th Orde r Coeff icient (G) | | - 6. 12 E-06 | 6. 35 E-14 | - 2.57 E-08 | - 0.187 90726 | 0. 00 29 82 76 3 | - 1.58 E-08 | - 3.20 E-10 | 1.66 E-11 | | | | | |
| 18th Orde r Coeff icient (H) | | 2. 94 E-07 | 1. 78 E-14 | 2.82 E-10 | 0.053 93835 1 | 0. 00 02 24 64 4 | 1.74 E-10 | 1.68 E-10 | - 8.66 E-12 | | | | | |
| 20th Orde r Coeff icient (J) | | 5. 62 E-09 | 1. 91 E-15 | - 1.31 E-12 | - 0.006 45379 8 | 7. 08 E-06 | - 1.05 E-12 | - 3.67 E-11 | 1.89 E-12 | | | | | |
| Apert ure / 2 | 1.5 | 1. 69 77 05 31 8 | 1. 54 17 93 12 2 | 1.37 764 762 6 | 1.221 0181 | 1. 19 36 72 51 3 | 1.04 861 801 | 0.99 968 646 6 | 0.97 253 574 7 | 1.04 431 903 6 | 1.77 291 300 2 | 1.82 515 241 4 | 1.74 329 549 4 | 1.656 5276 28 |
| Mate rial refra ctive index | | 1. 54 45 | | 1.68 | | 1. 58 82 | | 1.63 277 | | **1.51** 679 8 | **1.84** 666 | | **1.51** 679 8 | |
| Mate rial abbe numb er | | 56 .3 2 | | 18.4 | | 28 .3 | | 23.2 895 | | 64.1 983 | 23.7 848 | | 64.1 983 | |

Here, the left column of each lens discloses contents of a surface facing the waveguide, and the right column discloses contents of a surface facing the light source. In addition, about the side lens, the left column discloses contents of the surfaces F11, F21, F31 facing the light guide, and the right column discloses contents of the surfaces F12, F22, F32 facing the light source. In addition, the thickness of each lens corresponds to the left column. In addition, the space between adjacent lenses corresponds to the right column. For example, contents of the first surface of the first lens are disclosed in the left column. In addition, contents of the second surface of the first lens are disclosed in the right column. In addition, the thickness of the first lens may be 1.452 mm, and the distance between the first lens and the second lens may be 0.103 mm. Furthermore, the units of the thickness and the length may be mm. FIG. 16 is a view showing an optical system of a projection device according to a second embodiment.

Referring to FIG. 16, the projection device according to a second embodiment may include the optical system as described above. In particular, the optical system in present embodiment may include an aperture ST, an outer lens LS, a light guide LG, a side lens FL1, an optical element 233a, and a light source 232a as described in the first embodiment. In addition, those described above may be equally applied, except those described below.

However, in present embodiment, the light source may be one, and the optical system may include a first light source 232a. In correspondence thereto, the optical system may include a first optical element 233b and a first side lens FL1. Accordingly, the description of the second optical element, the third optical element, the second side lens, the third side lens, the second light source, and the third light source described above may not be applied in present embodiment.

In addition, in an embodiment, the light source includes only a first light source, and may include light sources having various colors or wavelength bands. The first light source may include an RGB light source, for example, an RGB LED. Or, the first light source may include a monochromatic light source (LED) that outputs any one color of RGB. Or, the first light source may include a light source (LED) that outputs two colors of RGB.

FIG. 17 is a view showing an optical system of a projection device according to a third embodiment.

Referring to FIG. 17, the projection device according to a third embodiment may include an optical system as described above. In the same manner, the optical system in this embodiment may include an aperture ST, an outer lens LS, a light guide LG, a side lens, an optical element, and a light source as described in the first or second embodiment.

In particular, in the optical system according to this embodiment, there may be a plurality of (e.g., three) light sources. In addition, there may also be a plurality of optical elements and side lenses in correspondence to the number of light sources. The description thereof may be applied in the same manner as described in the first embodiment described above.

In addition, the outer lens LS may include a plurality of lenses. At this point, the outer lens LS according to this embodiment may include a first lens L1, a second lens L2, and a third lens L3. The third lens L3, the second lens L2, and the first lens L1 may be sequentially disposed in the first direction (X-axis direction). For example, the first lens L1 may be disposed to be maximally spaced apart from the light guide LG among the outer lenses LS. The third lens L3 may be disposed to be minimally spaced apart from the light guide LG among the outer lenses LS. The second lens L2 may be disposed between the first lens L1 and the third lens L3.

Accordingly, the first lens L1, the second lens L2, and the third lens L3 may be at least partially overlapped with each other in the first direction.

Furthermore, the first surface S11 of the first lens L1 may be convex in the first direction. In addition, the second surface S12 may be concave in the first direction. In addition, the third surface S21 of the second lens L2 may be convex along the first direction. In addition, the fourth surface S22 may be convex or concave in the first direction. In addition, the fifth surface S31 of the third lens L3 may be concave in the first direction. In addition, the sixth surface S32 of the third lens L3 may be convex in the first direction.

Furthermore, the spaced distance between the first lens L1 and the second lens L2 may be greater than the spaced distance between the second lens L2 and the third lens L3. In addition, the spaced distance between the first lens L1 and the second lens L2 may be greater than the spaced distance between the third lens L3 and the light guide LG. In addition, the spaced distance between the third lens L3 and the light guide LG may be greater than the spaced distance between the second lens L2 and the third lens L3. In addition, the contents shown below in Table 2 may be applied to each component of the optical system according to this embodiment.

**[Table 2]**

| Com pone nts | A pe rt ur e | First lens | | Second lens | | Third lens | | Light guide | | Side lens | | Optical element | | Lig ht sou rce |
|---|---|---|---|---|---|---|---|---|---|---|---|---|---|---|
| Thic kness | 0. 2 | 1. 19 96 90 55 5 | 0.46 093 258 3 | 0.59 222 920 3 | 0.17 026 470 6 | 0.35 | 0.36 260 259 3 | 3.8 | 0 | 0.76 228 036 | 0.2( d6) | 0.21 | 0.571 4884 97(d7 ) | 0.00 543 230 5 |
| Y Radi us | | 2. 06 32 69 13 8 | 9.83 991 201 7 | 11.7 361 569 | 25.9 932 758 1 | 6.99 996 006 6 | 1.54 791 704 2 | infi nity | infi nity | infi nity | 3.69 580 296 4 | infi nity | infini ty | |
| Coni c Cons tant (K) | | 0. 17 15 33 58 7 | - 54.4 404 575 3 | 74.8 416 125 2 | 90 | 0 | 0 | | | | | | | |
| 4th Orde r Coeff icient (A) | | 0. 00 47 32 35 9 | 0.01 193 908 5 | 0.00 095 726 6 | - 0.02 881 152 5 | - 0.00 444 238 8 | 0.03 740 129 1 | | | | | | | |
| 6th Orde r Coeff icient (B) | | 0. 00 13 80 91 3 | - 0.00 310 533 3 | 0.00 080 265 9 | - 0.00 344 456 1 | - 0.10 437 251 6 | - 0.10 956 217 5 | | | | | | | |
| 8th Orde r Coeff icient (C) | | 0. 00 02 59 11 9 | 0.00 012 417 6 | 0.00 146 909 | 0.00 885 832 9 | 0.05 484 872 9 | 0.04 576 962 3 | | | | | | | |
| 10th | | - | 0.00 | 0.00 | 0.00 | - | 0.01 | | | | | | | |
| Orde r Coeff icient (D) | | 0. 00 01 62 70 4 | 038 417 | 478 196 5 | 926 752 | 0.00 327 621 1 | 509 724 8 | | | | | | | |
| 12th Orde r Coeff icient (E) | | | | | | | | | | | | | | |
| 14th Orde r Coeff icient (F) | | | | | | | | | | | | | | |
| 16th Orde r Coeff icient (G) | | | | | | | | | | | | | | |
| 18th Orde r Coeff icient (H) | | | | | | | | | | | | | | |
| 20th Orde r Coeff icient (J) | | | | | | | | | | | | | | |
| Apert ure / 2 | 1. 5 | 1. 68 14 71 33 8 | 1.56 994 227 3 | 1.28 282 496 3 | 1.06 964 120 4 | 0.99 716 862 3 | 0.89 047 980 5 | 0.92 226 354 6 | 1.78 440 973 2 | 1.78 440 973 2 | 1.83 517 254 4 | 1.74 041 884 4 | 1.721 4695 55 | 1.65 722 794 5 |
| Mate rial refra ctive index | | 1. 56 83 08 | | 1.49 699 7 | | 1.86 631 2 | | 1.51 679 8 | | 1.83 994 8 | | 1.51 68 | | |
| Material abbe numb er | | 67.6 5 | | 81.61 | | 26.57 | | 64.1983 | | 23.98 | | 64.1673 | | |

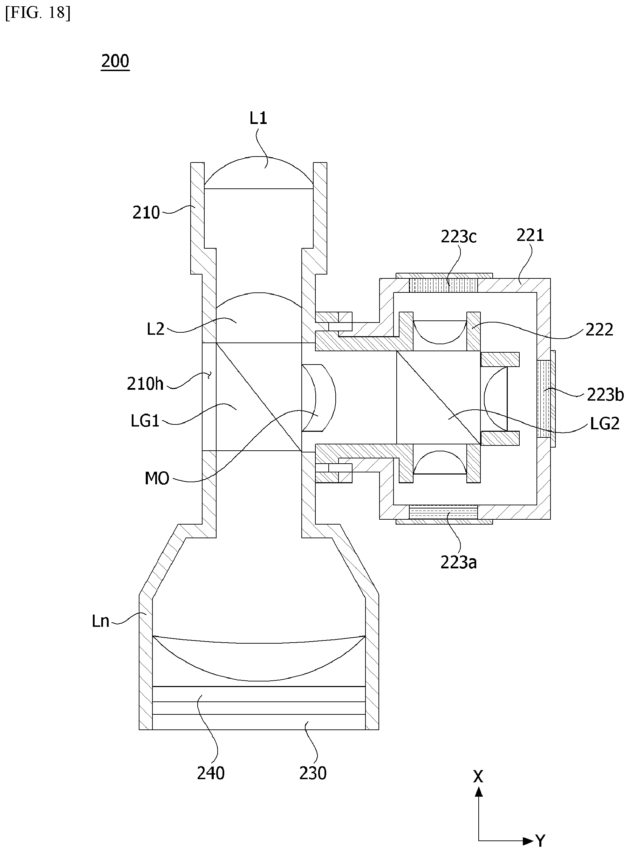

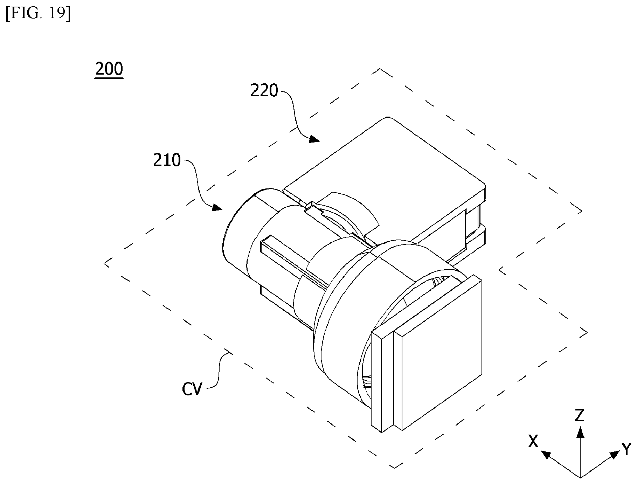

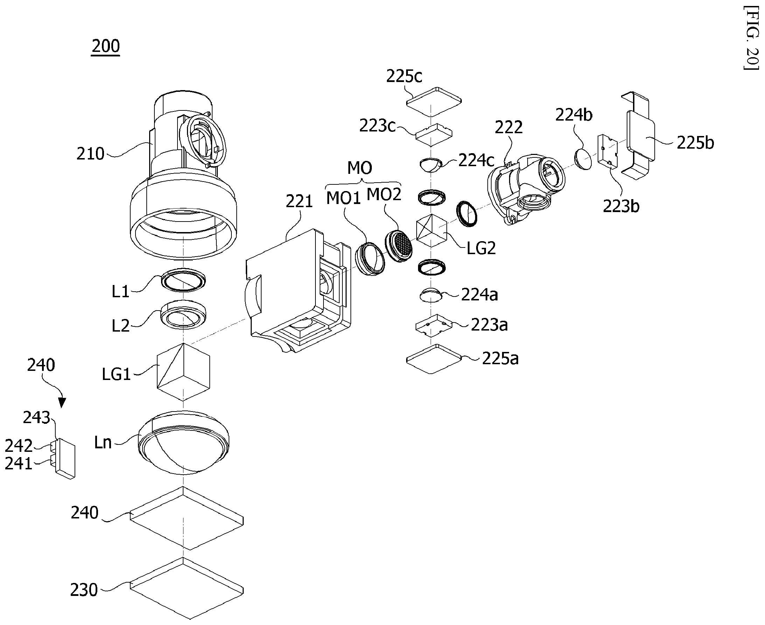

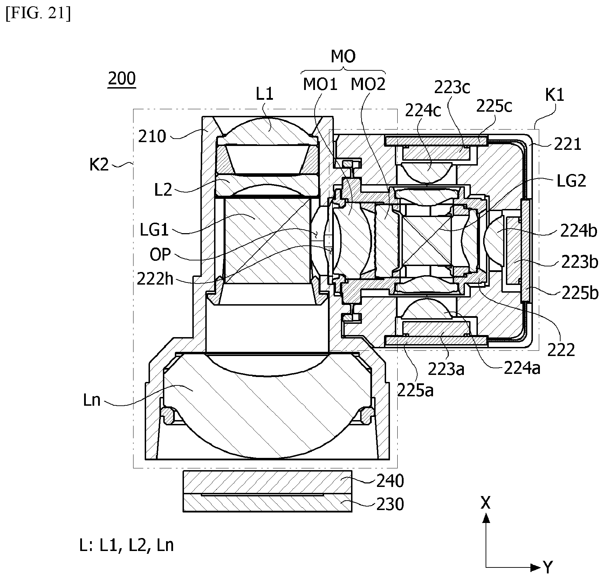

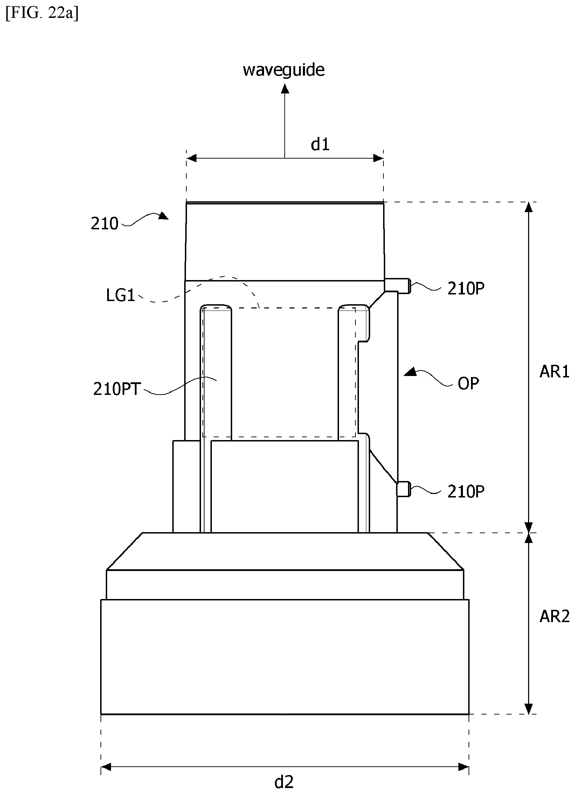

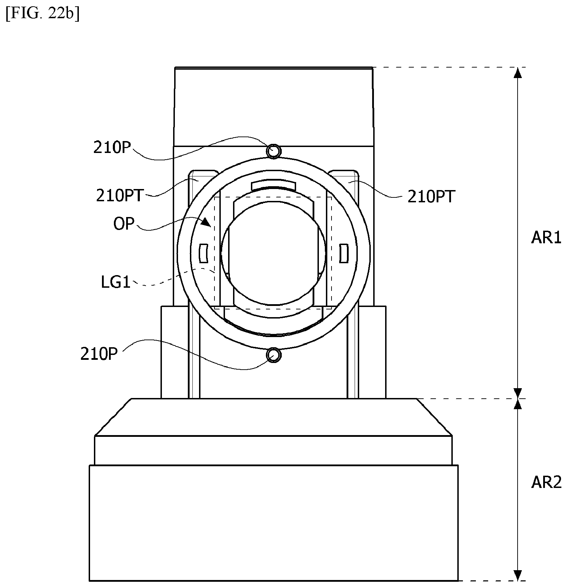

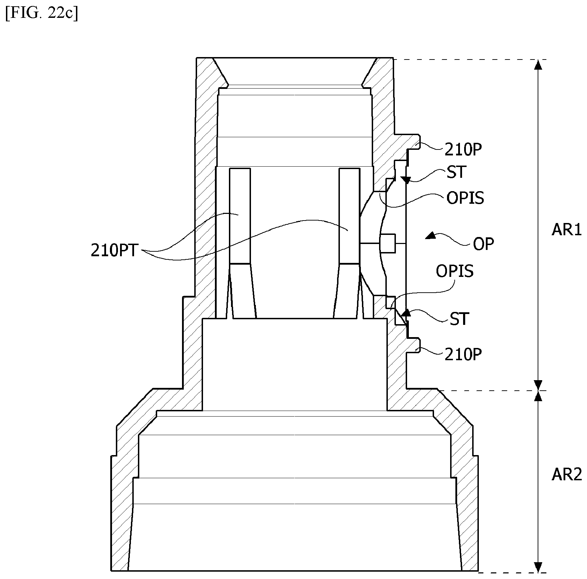

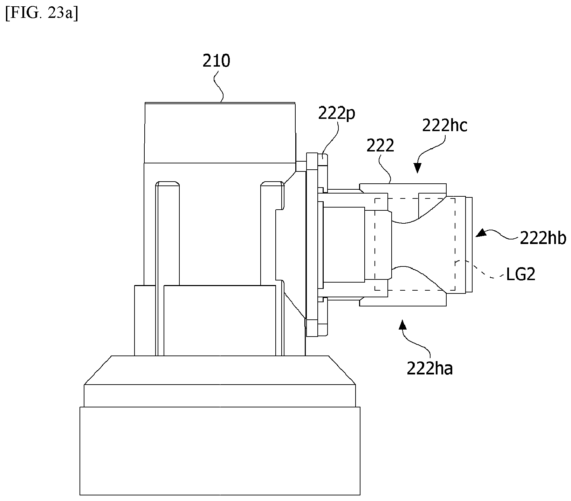

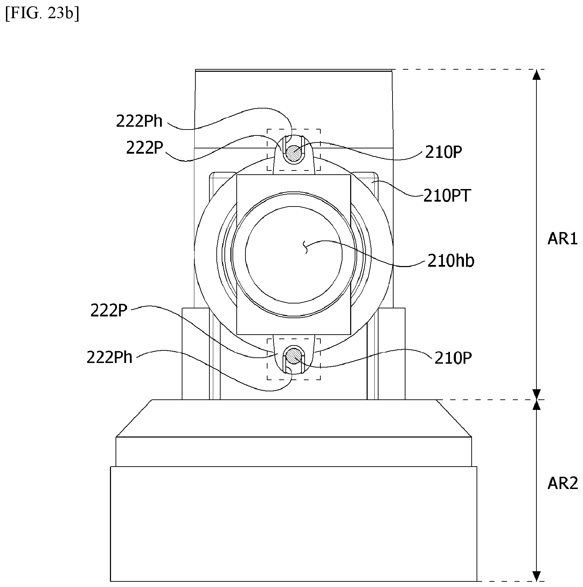

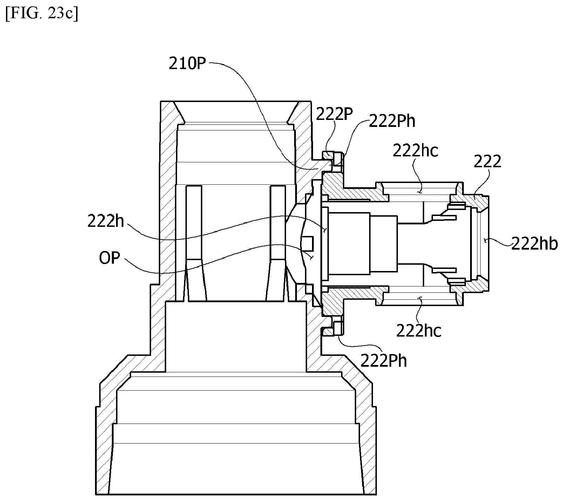

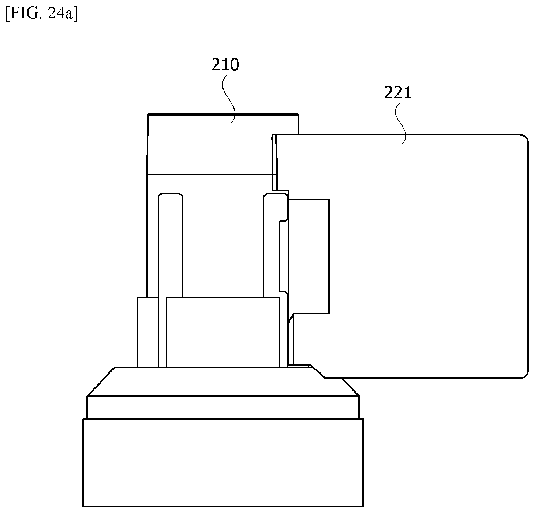

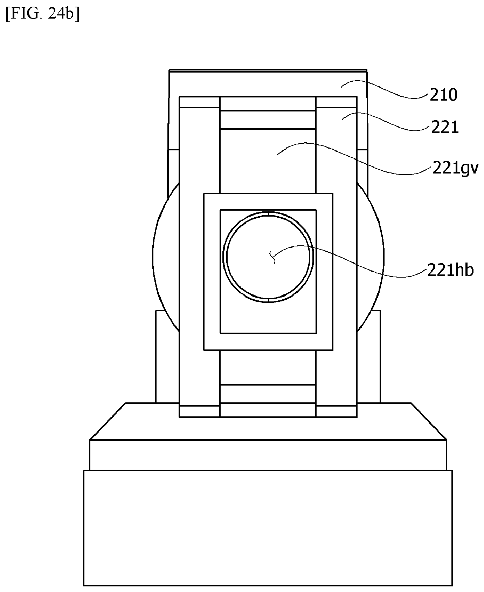

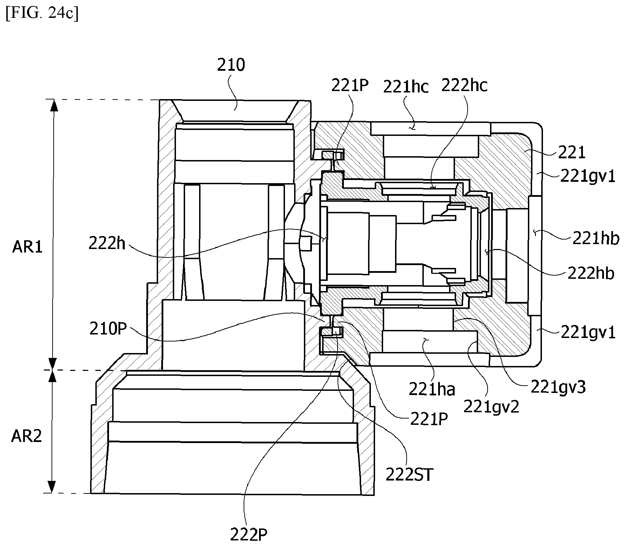

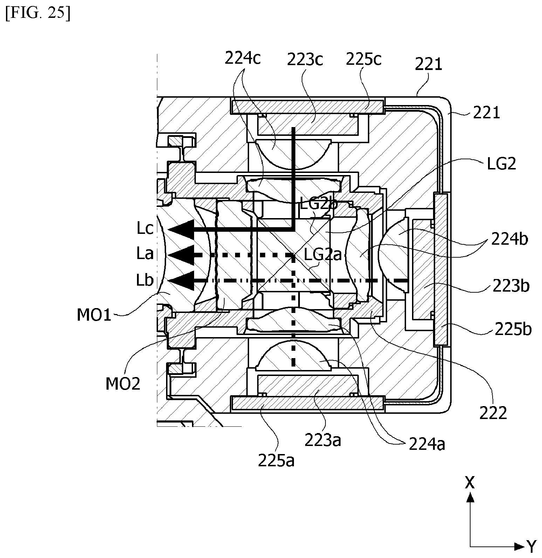

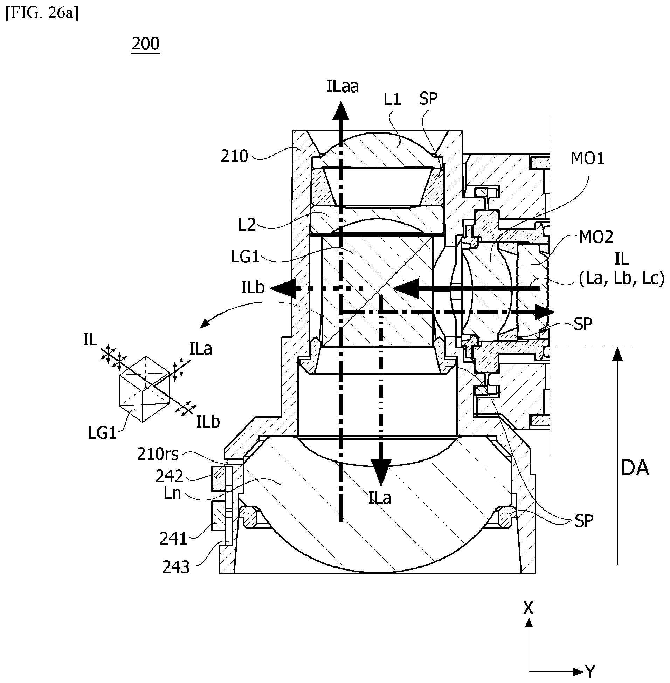

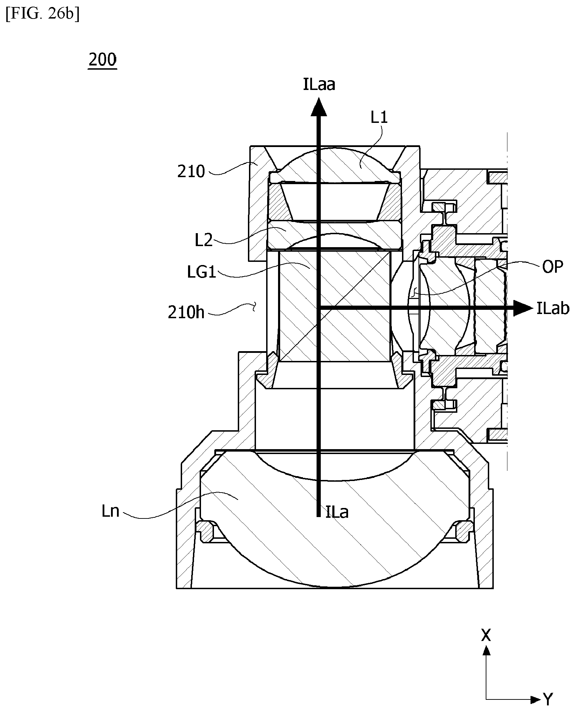

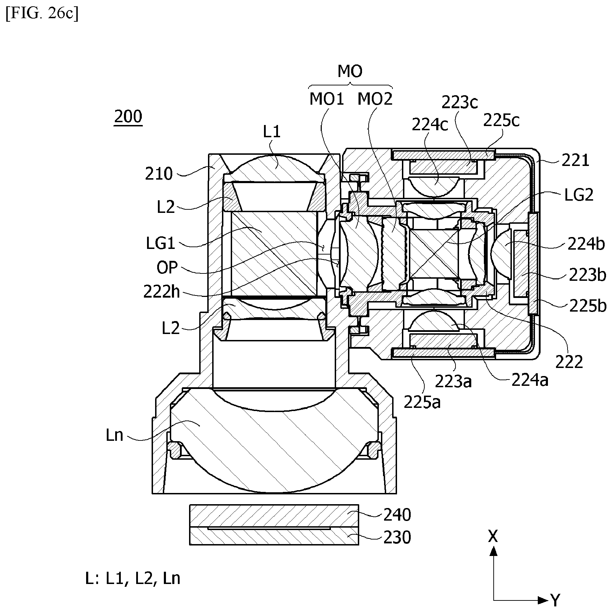

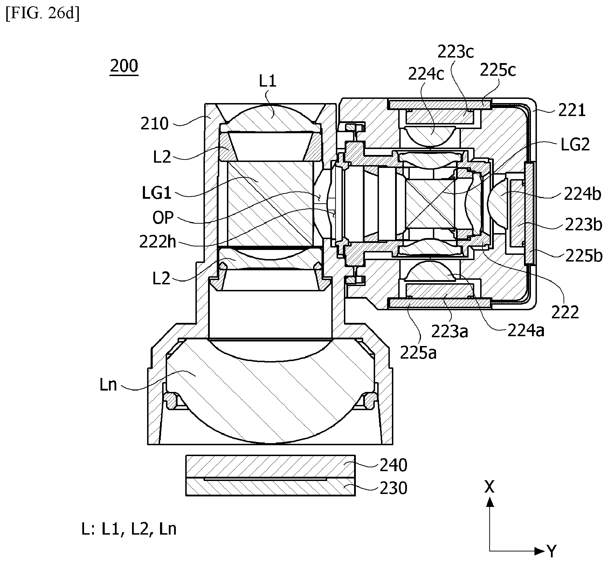

Here, the left column of each lens discloses contents of a surface facing the waveguide, and the right column discloses contents of a surface facing the light source. In addition, about the side lens, the left column discloses contents of the surfaces F11, F21, F31 facing the light guide, and the right column discloses contents of the surfaces F12, F22, F32 facing the light source. In addition, the thickness of each lens corresponds to the left column. In addition, the space between adjacent lenses corresponds to the right column. For example, contents of the first surface of the first lens are disclosed in the left column. In addition, contents of the second surface of the first lens are disclosed in the right column. Furthermore, for the light guide (side lens, optical element), the left column discloses contents of a surface facing the waveguide. For the light guide (side lens, optical element), the right column discloses contents of a surface facing each light source (e.g., the second light source in the case of the second side lens). Furthermore, in relation to the thickness of the light guide (side lens, optical element), the left column means the thickness of corresponding components (length according to the first direction or optical axis), and the right column means the spaced distance in the first direction between a corresponding component and a component closest toward the light source. For example, the thickness of the first lens may be 1.199690555 mm, and the spaced distance between the first lens and the second lens may be 0.460932583 mm. FIG. 18 is a conceptual view showing a projection device according to another embodiment, FIG. 19 is a perspective view showing a projection device according to another embodiment, FIG. 20 is an exploded perspective view showing a projection device according to another embodiment, FIG. 21 is a view taken along line AA' in FIG. 19, FIG. 22a is a side view showing a barrel in a projection device according to an embodiment, FIG. 22b is another side view showing a barrel in a projection device according to an embodiment, FIG. 22c is a cross-sectional view showing a barrel in a projection device according to an embodiment, FIG. 23a is a side view showing a barrel and a housing in a projection device according to an embodiment, FIG. 23b is another side view showing a barrel and a housing in a projection device according to an embodiment, FIG. 23c is a cross-sectional view showing a barrel and a housing in a projection device according to an embodiment, FIG. 24a is a side view showing a barrel, a housing, and a light source assembly in a projection device according to an embodiment, FIG. 24b is another side view showing a barrel, a housing and a light source assembly in a projection device according to an embodiment, FIG. 24c is a cross-sectional view showing a barrel, a housing, and a light source assembly in a projection device according to an embodiment, FIG. 25 is an enlarged view showing part K1 in FIG. 21, FIG. 26a is an enlarged view showing part K2 in FIG. 21, FIG. 26b is a modified example of FIG. 26a, FIG. 26c is another modified example of FIG. 26a, and FIG. 26d is still another modified example of FIG. 26a.

Referring to FIGS. 18 to 21, a projection device 200 according to another embodiment includes a barrel 210, a lens L, and a first light guide LG1. Furthermore, the projection device 200 may include a light source device 220 positioned in or combined with an opening part OP formed on the side surface of the barrel 210, and an optical signal generation unit 230 adjacent to the barrel 210. Furthermore, the projection device 200 may further include a cover CV that covers the barrel 210, the light source device 220, and the optical signal generation unit 230, and a substrate (including a connector, not shown).

The lens L may be plural. For example, the lens L may include a plurality of lenses sequentially disposed from the top of the barrel 210. For example, the lens L may include a first lens L1 disposed first in the upper portion, a second lens L2 disposed at the rear end of the first lens, and an N-th lens Ln disposed last in the upper portion. Here, N is a natural number and may be 2 or larger. In addition, the N-th lens Ln among the plurality of lenses L may be positioned to be closest to the optical signal generation unit 230 positioned at the rear end of the barrel 210 or at the rear end of the plurality of lenses L.

In addition, in an embodiment according to the present invention, the first direction (X-axis direction) may correspond to the optical axis. In addition, the first direction (X-axis direction) may correspond to the direction in which light emitted from the light source device 220 is reflected from the optical signal generation unit 230 and emitted to the display unit described above. In addition, the second direction (Y-axis direction) is a direction perpendicular to the first direction (Y-axis direction). Furthermore, the second direction (Y-axis direction) may correspond to the direction from the first light guide LG1 toward the opening part OP. In addition, in the following specification or this embodiment, the second direction (Y-axis direction) may correspond to the direction from the first light guide LG1 toward the second light guide LG2. The first light guide LG1 may be referred to as a first light guide unit or a first guide member. In addition, the second light guide LG2 may be referred to as a second light guide unit or a second guide member.

In addition, the barrel 210 may further include a hole corresponding to the opening part OP. As an embodiment, the barrel 210 may include a barrel hole or an additional hole 210h. The additional hole 210h may be positioned to face the opening part OP. Or, the additional hole 210h may be overlapped with the opening part OP in the second direction (Y-axis direction). Or, the distance of the additional hole 210h from the N-th lens Ln in the first direction may be equal to the distance between the opening part OP and the N-th lens Ln. Or, the additional hole 210h may be positioned in an area corresponding to the position of the opening part OP on the inner side surface of the barrel 210. Through the configuration like this, the bonding member may be easily applied to the light source device 220 combined, inserted, fixed, or connected to the opening part OP through the additional hole 210h. Accordingly, the coupling strength between the barrel 210 and the light source device 220 can be improved. Therefore, the projection device 200 according to an embodiment may have improved durability, endurance, or reliability. Or, an optical test on the light source device 220 positioned at the opening part OP may also be easily performed through the additional hole 210h. Or, discharge or ejection of fluid (e.g., air) from the barrel 210 and the light source device 220 may be easily performed through the additional hole 210h. Presence of the additional hole 210h may be applied in various ways according to embodiments. For example, the additional hole 210h may be disposed on the side surface of the barrel 210 as described above. Or, the additional hole 210h may not be provided on the side surface of the barrel 210 in consideration of durability or the like.

In addition, a plurality of lenses L may be positioned in the barrel 210. In addition, the first light guide LG1 may be positioned in the barrel 210.

In addition, the barrel 210 according to an embodiment may include an opening part OP formed on the side surface. The shape of the opening part OP may include various shapes such as a circle, a polygon, and the like. In addition, this opening part OP may correspond to the position of the first light guide LG1.

As an embodiment, the opening part OP may be overlapped with the first light guide LG1 in a direction perpendicular to the optical axis. For example, the opening part OP may be overlapped with the first light guide LG1 in the second direction. Through the configuration like this, light emitted from the light source device 220 positioned on the side surface of the barrel 210 may easily enter the first light guide LG1.

In addition, the first light guide LG1 may be disposed between two lenses among the plurality of lenses. For example, the first light guide LG1 may be disposed between the first lens L1 and the N-th lens Ln. In addition, the first light guide LG1 may be positioned between the first lens L1 and the optical signal generation unit 230. In addition, the first light guide LG1 may be positioned between the first lens L1 and the second lens L2 or between the second lens L2 and the N-th lens Ln. Various positions of the first light guide LG1 will be described in various embodiments as described below.

In this embodiment, the first light guide LG1 may be positioned between the second lens L2 and the N-th lens Ln. Accordingly, the N-th lens Ln may be positioned between the first light guide LG1 and the optical signal generation unit 230. Through the configuration like this, an appropriate optical path may be secured when the light reflected from the first light guide LG1 is provided to the optical signal generation unit 230. In addition, refraction may be performed on the reflected light. Accordingly, miniaturization of the first light guide LG1 can be achieved.

The first light guide LG1 may include a first prism. The first prism may be a polarizing prism. In addition, the first prism may be a polarized light splitter prism.

The first prism may reflect first polarized light and transmit second polarized light. For example, part of light (the first polarized light) provided from the light source device 220 or entering the first light guide LG1 may be reflected from the first light guide LG1 and provided to the optical signal generation unit 230. In addition, other part of the light (the second polarized light) entering the first light guide LG1 may pass through the first light guide LG1 to be absorbed in the barrel 210.

In addition, light emitted from the light source device 220 may enter the first light guide LG1 through the opening part OP. To this end, as described above, the opening part OP may be disposed in an area where the first light guide LG1 is positioned. For example, the incident surface of the first light guide LG1 may be positioned to face the opening part OP. Or, in the barrel 210, the position of the first light guide LG1 may be the same as that of the first light guide LG1.

The light source device 220 including a light source 223 may generate (produce, provide) or emit light. The light source device 220 according to an embodiment may be positioned in or combined with the opening part OP. That is, the light source device 220 may be connected or combined with the barrel 210.

The light source device 220 may include a housing 222 including an opening 222h, a second light guide LG2 disposed inside the housing 222, and a light source 223 that provides light to the second light guide LG2.

Furthermore, the light source device 220 may include a light source assembly 221 disposed outside the light source device 220 to surround the housing 222, a light source lens 224 adjacent to the light source 223, and an intermediate lens MO positioned inside the housing 222.

The light source assembly 221 may be disposed at the outermost side in the light source device 220. When it is difficult to install the light source 223 inside the housing 222 or it needs to install an additional lens (light source lens), the light source assembly 221 may be positioned outside the housing 222. The light source assembly 221 may be a structure integrated with or separated from the housing 222.

The housing 222 may include an opening 222h. The housing 222 may be positioned to be adjacent to the opening part OP of the barrel 210. For example, the opening 222h of the housing 222 may be positioned in correspondence to the opening part OP of the barrel 210. Accordingly, the opening 222h of the housing 222 may be overlapped with the opening part OP of the barrel 210 in the second direction (Y-axis direction).

The light source 223 may be positioned inside the housing 222 or the light source assembly 221. The light source 223 may emit light. For example, light emitted from the light source 223 may enter the second light guide LG2 inside the housing 222. The second light guide LG2 may be positioned inside the housing 222. Accordingly, the second light guide LG2 may transmit light emitted from the light source 223 to the opening 222h or the first light guide LG1.

In addition, the light source 223 may be one or more. That is, the light source 223 in the light source device 220 may be single or plural. For example, the light source 223 may be plural and include a first light source 223a, a second light source 223b, and a third light source 223c. The first to third light sources 223a to 223c may emit light in the same direction or different directions. For example, the first and third light sources 223a and 223c may be positioned to face each other. The first and third light sources 223a and 223c may be positioned to be overlapped with each other in the first direction (X-axis direction). In addition, the second light guide LG2 may be positioned between the first light source 223a and the third light source 223c. Accordingly, the second light guide LG2 may be overlapped with the first light source 223a and the third light source 223c. In addition, the second light source 223b may be positioned between the first light source 223a and the third light source 223c. The first to third light sources 223a to 223c may emit light toward the second light guide LG2. In addition, the second light source 223b may be overlapped with the second light guide LG2 in the second direction. Through the configuration like this, the projection device 200 may have a compact light source device 220.

In addition, each of the first light source 223a, the second light source 223b, and the third light source 223c may emit light of a wavelength or a color that is the same as or different from the others. For example, the first light source 223a, the second light source 223b, and the third light source 223c may emit red, green, and blue light.

The second light guide LG2 may include a second prism. The second prism may include, for example, an X-prism as a reflection member. As an embodiment, the second light guide LG2 or the second prism may be a structure that combines at least two or more prisms.

In addition, the second prism may include at least two or more coating surfaces (reflection members or reflection sheets). One of these at least two or more coating surfaces may reflect light of a first wavelength and light of a second wavelength, and transmit light of a third wavelength. That is, the coating surface may reflect light of a predetermined wavelength band. Accordingly, light of a desired wavelength band may be reflected from the second light guide LG2 for each of lights emitted from the plurality of light sources 223. For example, light passing through the second light guide LG2 may be provided to the first light guide LG1 or the intermediate lens MO.

The light source lens 224 may be positioned to be adjacent to the light source 223. For example, the light source lens 224 may be plurality. The light source lenses 224 may be positioned on the path of light emitted from each light source 223.

As an embodiment, the light source lens 224 may be positioned between the second light guide LG2 and the light source 223. In addition, the light source lens 224 may be plural. The light source lens 224 may be positioned in plural between the second light guide LG2 and the light source 223. Or, the light source lens 224 may be plural in correspondence to each of the plurality of light sources 223.

For example, the light source lens 224 may include a first light source lens 224a, a second light source lens 224b, and a third light source lens 224c. The first light source lens 224a may be positioned between the first light source 223a and the second light guide LG2. The second light source lens 224b may be positioned between the second light source 223b and the second light guide LG2. The third light source lens 224c may be positioned between the third light source 223c and the second light guide LG2.

**In** addition, each of the first light source lens 224a, the second light source lens 224b, and the third light source lens 224c may be positioned in plural on each of the first light source 223a, the second light source 223b, and the third light source 223c. For example, any one among a plurality of first light source lenses 224a may be positioned on the first light source 223a and combined with the light source assembly 221. **In** addition, another one among the plurality of first light source lenses 224a may be positioned between any one of the first light source lenses 224a and the second light guide LG2 and combined with the housing 222.

In addition, the first light source lens 224a, the second light source lens 224b, and the third light source lens 224c may include a collimating lens or a collimator.

In addition, a substrate 225 connected to the light source 223 may be disposed in the light source assembly 221. The substrate 225 may be at least one in correspondence to the light source 223. For example, a plurality of substrates 225 may include a first substrate 225a, a second substrate 225b, and a third substrate 225c. As described above, the plurality of substrates 225 may be one substrate as a whole, or may be plural in correspondence to the number of light sources.

In addition, the substrate 225 may be electrically connected to a control unit or a processor in the frame (or display unit) described above. Accordingly, the substrate 225 may include a connector for communicating with an external device or a connected device. Furthermore, the substrate 225 may be disposed outside the light source 223 to discharge heat generated by the light source to the outside. Accordingly, reliability of the light source device 220 can be improved.

The intermediate lens MO may be positioned between the opening 222h and the second light guide LG2. In addition, the intermediate lens MO may be positioned between the first light guide LG1 and the second light guide LG2.

The intermediate lens MO may include a plurality of lenses. For example, it may include a first intermediate lens MO1 and a second intermediate lens MO2. However, as described below, light reflected from the second light guide LG2 may be directly provided to the first light guide LG1 without the intermediate lens MO.

The first intermediate lens MO1 may include a first surface MO1s1 adjacent to the first light guide LG1 and a second surface MO1s2 corresponding to the first surface MO1s1. Light emitted from the light source 223 may pass through the second light guide LG2 and sequentially pass through the second surface MO1s2 and the first surface MO1s1.

The second surface MO1s2 may be convex toward the second light guide LG2. Or, the second surface MO1s2 may be concave toward the first light guide LG1. Furthermore, the first surface MO1s1 may be convex or concave toward the second light guide LG2. For example, the first intermediate lens MO1 may have a meniscus shape. In this way, as the second surface MO1s2 is convex toward the second light guide LG2, light may be focused while passing through the intermediate lens MO. Accordingly, uniformity of light provided to the optical signal generation unit 230 can be improved. In other words, light entering the optical signal generation unit 230 may be surface light. In addition, uniformity of the surface light can be improved. Accordingly, accuracy or resolution of image signals or images output to the display unit through the projection device 200 according to an embodiment can be improved.

The second intermediate lens MO2 may include a micro lens array (MLA). Accordingly, uniformity or planarization of the light passing through the second light guide LG2 may be performed partially.

Furthermore, the size of the second intermediate lens MO2 may be different from that of the second light guide LG2. In addition, the size of the first intermediate lens MO1 may be different from that of the second light guide LG2. For example, the second intermediate lens MO2 may be larger than the second light guide LG2.

In addition, the positions of the plurality of lenses L, the intermediate lens MO, and the light source lens 224 may be maintained by spacers SP. For example, there may be a plurality of spacers SP inside the barrel 210 to be adjacent to the plurality of lenses L. In addition, a plurality of spacers SP adjacent to the intermediate lens MO and the light source lens 224 may be disposed in the housing 222 or the light source assembly 221 of the light source device 220. As an embodiment, the plurality of spacers SP may be disposed on the top or bottom of the lenses described above to fix or maintain the positions of the lenses.

The optical signal generation unit 230 may be positioned at the rear end of the barrel 210. The optical signal generation unit 230 may be overlapped with the lens L in the optical axis or the first direction (X-axis direction).

The optical signal generation unit 230 may convert light that enters the first light guide LG1, is reflected, and then passes through the N-th lens into an optical signal containing image information.

The optical signal generation unit 230 may reflect light (first polarized light) reflected from the first light guide LG1. The optical signal generation unit 230 may generate an optical signal including image information. That is, the light reflected from the optical signal generation unit 230 may be light including image information.

The optical signal generation unit 230 may include a liquid crystal on silicon (LCoS).

The liquid crystal on silicon may be a structure in which liquid crystal is filled between a silicon wafer (a thin disc used as a semiconductor material) having a Complementary Metal-Oxide Semiconductor (CMOS) array and an anti-reflection (AR) material coated with a transparent electrode (Indium Tin Oxide, ITO).

In addition, an initial liquid crystal alignment may be formed as an alignment layer is formed on the wafer (silicon wafer).

Furthermore, a reflective layer or reflective electrode formed as an aluminum layer and having a high optical reflectivity may be positioned under the alignment layer. The reflective electrode may be positioned on the silicon wafer. In addition, a semiconductor array (CMOS array) may be formed on the silicon wafer. In addition, transmission of data signals through the panel can be accomplished through the semiconductor array.

The optical signal generation unit 230 may reflect at least part of the light that enters according to driving. In addition, the optical signal generation unit 230 may reflect the light that enters from a surface light source by the pixel. In addition, intensity of the reflected light can be adjusted according to the degree of modulation. For example, the optical signal generation unit 230 may partially modulate first polarized light into second polarized light. Accordingly, the light modulated into the second polarized light may be provided to the display unit (or waveguide) through the first light guide LG1 and the first lens L1.

That is, the optical signal generation unit 230 may modulate retardation of the modulated light, i.e., the polarized light. The optical signal generation unit 230 may perform retardation of the first polarized light in various ways. That is, an electric field may be formed by adjusting the voltage for each pixel (adjusting voltage of the electrode). In addition, the degree of twisting of the liquid crystal may also be adjusted according to the adjusted voltage. For example, at the maximum voltage, the light reflected from the optical signal generation unit 230 may be completely reflected from the first light guide LG1. In addition, at the minimum voltage, all the light reflected from the optical signal generation unit 230 may pass through the second light guide LG1. However, it may operate in the opposite way according to the electric field. In addition, when an intermediate voltage is applied, part of the light may pass through the first light guide LG1. That is, intensity (e.g., brightness) of the light provided to the display unit may be intermediate.

In this way, the optical signal generated by the optical signal generation unit 230 may be transmitted to the first lens L1 through the N-th lens Ln and the first light guide LG1. Furthermore, at least part of the optical signal generated by the optical signal generation unit 230 may pass through the first lens L1 and enter the display unit.

In addition, a transparent element 240 may be further disposed between the optical signal generation unit 230 and the N-th lens Ln (or the first light guide). The transparent element 240 may be glass. The transparent element 240 may be combined with the barrel 210 or the cover CV. Furthermore, the transparent element 240 may be positioned on the optical signal generation unit 230. Accordingly, inflow of foreign substances into the optical signal generation unit 230 can be easily prevented. In addition, the size of the transparent element 240 may be the same as or different from the size of the optical signal generation unit 230. Furthermore, the transparent element 240 may be overlapped with at least a portion of the optical signal generation unit 230 in the optical-axis direction or the first direction (X-axis direction).

Describing FIGS. 22a to 22c more specifically, in the projection device according to an embodiment, the barrel 210 may include a hole as described above, and further include an opening part OP positioned on the side surface. The hole extended in the first direction inside the barrel 210 may be exposed through the opening part OP.

For example, the barrel 210 may be connected to or positioned to be adjacent to the waveguide on one side of the hole extended in the first direction. In addition, the barrel 210 may be connected to or positioned to be adjacent to the optical signal generation unit 230 on the other side of the hole extended in the first direction.

The first light guide LG1 described above may be positioned inside the barrel 210. The first light guide LG1 may be partially overlapped with the opening part OP in the second direction. The opening part OP may be at least partially overlapped with the first light guide LG1 in the second direction. In addition, the opening part OP may be longer than the first light guide LG1 in the first direction.

In addition, the barrel 210 may include barrel protrusions 210p adjacent to the opening part OP and extended toward the outside. Or, the barrel 210 may include barrel protrusions 210p protruding toward the outside. The barrel protrusions 210p may be disposed symmetrically with respect to the opening part OP. In addition, the barrel protrusions 210p may be overlapped in the first direction. Accordingly, the coupling strength between the barrel 210, and the housing and the light source assembly described below can be improved.

Furthermore, in the first region AR1 of the barrel 210, the length of the opening part OP may be the longest in the second and third directions. The first region AR1 may correspond to a region positioned on the top of the last lens in the barrel 210. The second region AR2 may be adjacent to the optical signal generation unit 230 under the first region AR1. In other words, the second region AR2 may be positioned between the first region AR1 and the optical signal generation unit 230.

As an embodiment, the length d2 or the diameter of the second region AR2 in the second direction may be greater than the length d1 or the diameter of the first region AR1 in the second direction. Furthermore, the second region AR2 may be at least partially overlapped with the housing and the light source assembly in the first direction.

In addition, the barrel protrusions 210p described above may be positioned in the first region AR1. Furthermore, the first light guide LG1 may also be positioned in the first region AR1. In addition, the opening part OP may also be positioned in the first region AR1.

In addition, the barrel 210 may include protrusion units 210PT protruding toward the outside. The protrusion units 210PT may be positioned in the first region AR1. Furthermore, the protrusion units 210PT may be positioned in correspondence to the first light guide LG1 inside the barrel 210.

As an embodiment, by the protrusion units 210PT, the barrel 210 may include a groove or a trench in a portion of the inner side surface. That is, the protrusion units 210PT may be positioned in correspondence to an edge (side) or a vertex of the first light guide LG1 positioned inside the barrel 210. Or, the protrusion units 210PT may have a shape corresponding to the shape of the first light guide LG1 of hexahedron. Accordingly, the assembly property between the first light guide and the barrel can be improved.

The protrusion units 210PT may be overlapped with the opening part OP in the second direction.

In addition, protrusions or the like may be positioned in a predetermined area of the opening part OP. In addition, a plurality of steps ST may exist on the inner side surface OPIS of the opening part OP. By the protrusions and steps ST of the opening part OP, spacers may be positioned in the opening part OP easily. In other words, the coupling strength between the spacers and the barrel can be improved.

In addition, the assembly property between the light source device and the opening part OP (or barrel) may also be improved.

Describing FIGS. 23 to 23c more specifically, in the light source device 220 according to an embodiment, the housing 222 may include housing protrusions 222P protruding toward the outside. The barrel protrusions 210p may protrude from the outer side surface of the barrel 210 toward the light source device 220. That is, the barrel protrusions 210p may be extended or protrude from the outer side surface of the barrel 210 in the second direction.

On the contrary, the housing protrusions 222p of the housing 222 may be extended or protrude from the housing 222 in the first direction. In other words, the housing protrusions 222p may be extended in a direction perpendicular to the barrel protrusions 210p.

The light source device 220 may be combined with the barrel 210 on the side surface of the opening part OP as described above. The light source device 220 may include a light source, a housing 222, a light source assembly, and the like.

In addition, the opening 222h of the housing 222 may face the opening part OP. For example, the opening 222h of the housing 222 may be overlapped with the opening part OP in the second direction. In addition, the size of the opening 222h of the housing 222 may be different from that of the opening part OP. For example, the opening 222h of the housing 222 may be smaller than the opening part OP. Accordingly, light reflected through the second light guide LG2 may be provided into the barrel with high efficiency.

The housing protrusion 222P may include a protrusion hole 222ph. The barrel protrusion 210p may at least partially penetrate the housing protrusion 222P. That is, the barrel protrusion 210p may be positioned inside the protrusion hole 222ph. Through the configuration like this, the coupling strength between the housing 222 and the barrel 210 can be improved.

**In** addition, an area of the protrusion hole 222ph may be exposed. For example, the housing protrusion 222P may include the protrusion hole 222ph extended in the second direction. **In** addition, an area of the housing protrusion 222P may be removed. That is, the housing protrusion 222P may further include an exposure groove. By the exposure groove, the protrusion hole 222ph may be exposed. Furthermore, the protrusion groove 222ph may be plural and overlapped with each other in the first direction. Accordingly, the housing 222 may be easily combined with the barrel 210 and the barrel protrusions 210p while moving along the second direction.

Furthermore, as described above, the second light guide LG2 may be positioned within the housing 222.

In addition, the housing 222 may include at least one housing hole 222ha, 222hb, 222hc corresponding to the second light guide LG2. In an embodiment, the number of housing holes may also vary in correspondence to the number of light sources. Hereinafter, it will be described on the assumption that the number of housing holes and the number of light sources are three, respectively.

The housing hole may include a first housing hole 222ha, a second housing hole 222hb, and a third housing hole 222hc. The first housing hole 222ha, the second housing hole 222hb, and the third housing hole 222hc may be positioned to correspond to each side of the second light guide LG2.

Furthermore, a lens may be positioned in each of the first housing hole 222ha, the second housing hole 222hb, and the third housing hole 222hc.

Describing FIGS. 24a to 24c more specifically, the light source device 220 according to an embodiment may include the light source assembly 221 surrounding the housing 222 as described above.

In addition, the light source assembly 221 may include an assembly protrusion 221p disposed inside the protrusion hole 222ph. The light source assembly 221 may surround the outside of the housing 222 and include an assembly protrusion 221p extended into the protrusion hole 222ph of the housing 222. The assembly protrusion 221p may be extended along the second direction. For example, the assembly protrusion 221p may at least partially penetrate the protrusion hole 222ph. Through the configuration like this, the coupling strength between the light source assembly 221, the housing 222, and the barrel 210 can be improved. Or, the coupling strength between the light source device 220 and the barrel 210 can be improved.

In addition, the assembly protrusion 221p may face the barrel protrusion 210p. That is, the assembly protrusion 221p may be overlapped with the barrel protrusion 210p in the second direction. In addition, the assembly protrusion 221p may be overlapped with an area exposed from the protrusion hole 222ph in the first direction. That is, the assembly protrusion 221p may be positioned in the area exposed from the protrusion hole 222ph. Accordingly, the light source assembly 221 may be easily assembled with the housing 222 and the barrel 210, and the coupling strength with the housing and the barrel may also be improved.

In addition, the assembly protrusion 221p may be plural in correspondence to the barrel protrusions 210p, and the plural of assembly protrusions 221p may be overlapped with each other in the first direction. Accordingly, as they have a uniform coupling strength, reliability of the projection device or the light source assembly can be improved.

In addition, the housing 222 may include at least one housing hole corresponding to the second light guide LG2. As described above, the housing hole may include a first housing hole 222ha, a second housing hole 222hb, and a third housing hole 222hc.

In correspondence thereto, the light source assembly 221 may include at least one assembly hole corresponding to the second light guide LG2 or the housing hole.

The assembly hole may be plural. For example, the assembly holes may include a first assembly hole 221ha, a second assembly hole 221hb, and a third assembly hole 221hc.

The first assembly hole 221ha, the second assembly hole 221hb, and the third assembly hole 221hc may correspond to each side of the second light guide LG2. In addition, the first assembly hole 221ha, the second assembly hole 221hb, and the third assembly hole 221hc may be positioned in correspondence to the first housing hole 222ha, the second housing hole 222hb, and the third housing hole 222hc, respectively.

For example, the first assembly hole 221ha, the second assembly hole 221hb, and the third assembly hole 221hc may be positioned to face the first housing hole 222ha, the second housing hole 222hb, and the third housing hole 222hc, respectively.

In addition, the first housing hole 222ha, the third housing hole 222hc, the first assembly hole 221ha, and the third assembly hole 221hc may be at least partially overlapped in the first direction or toward the optical axis. In addition, the second housing hole 222hb and the second assembly hole 221hb may be at least partially overlapped in the second direction. Furthermore, the second housing hole 222hb and the second assembly hole 221hb may also be overlapped with the opening part OP and the opening 222h of the housing 222 in the second direction.

In addition, at least one assembly hole may be connected to another one. For example, the first assembly hole 221ha, the second assembly hole 221hb, and the third assembly hole 221hc may be connected to each other at least in an area.

More specifically, the assembly hole (first to third assembly holes) may be configured of a plurality of holes according to the location. For example, the assembly hole may include a first hole 221gv3, a second hole 221gv2 disposed outside the first hole 221gv3, and a third hole 221gv1 disposed outside the second hole 221gv2. That is, each of the first to third assembly holes may include the first to third holes 221gv3 to 221gv1. At this point, the third holes 221gv1 disposed in the assembly holes may be connected to each other.

For example, the first hole 221gv3 may be positioned to be adjacent to the second light guide LG2 or the housing 222 compared to the second hole and the third hole. Or, the first hole 221gv3 may be positioned to be closest to the second light guide LG2 or the housing 222 compared to the second hole and the third hole.

In addition, the size of the third hole 221gv1 may be larger than those of the second hole 221gv2 and the first hole 221gv3. For example, the area of the third hole 221gv1 may be larger than the area of at least one among the second hole 221gv2 and the first hole 221gv3.

Accordingly, the lenses may be easily installed in the first hole 221gv3. Furthermore, a light source may be positioned in the second hole 221gv2, and the substrate 225 may be positioned in the third hole 221gv1. That is, the assembly property between the light source assembly 221 and other components (lens, light source, substrate) can be improved.

Furthermore, the substrate may be easily seated in the third hole 221gv1 positioned at the outermost side among the assembly holes of the light source assembly 221. That is, the coupling strength between the substrate and the light source assembly can be improved. In addition, a plurality of third holes 221gv1 may be integrally connected. To this end, the substrate may have flexibility in an area. For example, the substrate may include a flexible printed circuit board (FPCB), a rigid printed circuit board (RPCB), and a flexible-rigid printed circuit board (FRPCB).

In addition, the substrate may be configured as a flexible printed circuit board in a curved area. Furthermore, as the substrate is disposed inside the integrally configured third hole 221gv1, heat generated by the light source can be easily discharged to the outside through the substrate. Accordingly, reliability of the light source device or the projection device can be improved.

In addition, the light source assembly 221 may include a step unit 222ST formed in an area adjacent to the second region AR2. That is, the size of the barrel may vary in correspondence to the size of the lens (N-th lens) Ln disposed between the first light guide of the barrel and the optical signal generation unit 230. At this point, as the light source assembly 221 has the step unit 222ST in correspondence to the change of size, the assembly property between the light source assembly and the barrel can be improved. For example, the step unit 222ST may be positioned in an area of the light source assembly 221 adjacent to the barrel 210 and overlapped with the second region AR2 in the first direction.

Describing FIG. 25a more specifically, the light La, Lb, Lc emitted from each light source 223 of the light source device 220 may pass through the light source lens 224, the second light guide LG2, and the intermediate lens MO. For example, the first light La, the second light Lb, and the third light Lc emitted from of the first light source 223a to the third light source 223b may be emitted in the same direction in the second light guide LG2.

For example, the second light guide LG2 may include a first coating surface LG2a and a second coating surface LG2b. As described above, one of these at least two coating surfaces may reflect some among the light of a first wavelength, light of a second wavelength, and light of a third wavelength. For example, the first wavelength includes the wavelength band of red light. The second wavelength includes the wavelength band of green light. The third wavelength includes the wavelength band of blue light.

In addition, the first coating surface LG2a may reflect the first light La or the light of the first wavelength. That is, the first coating surface LG2a may transmit the second light Lb and the third light Lc. In other words, the first coating surface LG2a may transmit the light of the second wavelength and the light of the third wavelength.

The second coating surface LG2b may reflect the second light Lb or the light of the second wavelength. That is, the second coating surface LG2b may transmit the first light La and the third light Lc. In other words, the second coating surface LG2b may transmit the light of the first wavelength and the light of the third wavelength.

Accordingly, in the second light guide LG2, the first light La may be reflected from or enter the intermediate lens MO or the opening part OP. In addition, in the second light guide LG2, the second light Lb may be reflected from or enter the intermediate lens MO or the opening part OP. In addition, in the second light guide LG2, the third light Lc may be reflected from or enter the intermediate lens MO or the opening part OP.

Accordingly, the light IL or La, Lb, Lc emitted from the light source 223 may enter the first light guide LG. At this point, the light entering the first light guide LG may be a first incident light IL.

Describing FIG. 26a more specifically, the first incident light IL may be partially reflected and partially transmitted in the first light guide LG1. That is, the first light guide LG1 may reflect the first polarized light ILa and transmit the second polarized light ILb of the first incident light IL. For example, each of the first polarized light ILa and the second polarized light ILb may be one among S/P light different from each other. Accordingly, the first polarized light ILa, which is part of the first incident light IL, may be provided to the optical signal generation unit 230 via the N-th lens Ln. In addition, the second polarized light ILb may be absorbed by the barrel 210 or provided to the additional hole 210h.

Describing FIG. 26b more specifically, the optical signal generation unit 230 may reflect the first polarized light ILa by controlling the voltage as described above. In the embodiment, the first polarized light ILa reflected from the optical signal generation unit 230 is described below as reflected polarized light.

In this way, the first light guide LG1 may reflect at least part of the light IL emitted from the light source 223 and entered the first light guide to the N-th lens (or the optical signal generation unit). That is, the reflected polarized light may be at least partially reflected from the first light guide LG1. However, as described above, according to the voltage applied by the optical signal generation unit 230, all the reflected polarized light can be reflected or transmitted in the first light guide LG1. Hereinafter, it will be described on the assumption that the reflected polarized light is at least partially transmitted in the first light guide LG1.

The reflected polarized light may include a first reflected polarized light ILaa passed through the first light guide LG1 and a second reflected polarized light ILab reflected from the first light guide LG1. As described above, intensity of the first reflected polarized light ILaa, i.e., the degree of transmission of the reflected polarized light, may be adjusted in correspondence to an image provided to the display unit.

Furthermore, the projection device 200 according to an embodiment may further include a display unit disposed in front of the first lens L1 to display optical signals including image information transmitted to the first lens L1 as an image. In other words, the projection device 200 may be a structure integrated with the display unit described above. However, it will be described on the assumption that the projection device 200 is a structure separate from the display unit.

Furthermore, as a modified example, the barrel 210 may further include an additional hole 210h on the side surface as shown in FIG. 26b. For example, the second polarized light may be provided to the additional hole 210h. The descriptions of other embodiments described above may be equally applied to the description of the modified example.

Describing FIG. 26c, according to another modified example, the position between the plurality of lenses and the first light guide LG1 in the barrel 210 may be different. Except the contents described below, the contents described in each embodiment of the present specification may be applied.

In this example, among the plurality of lenses L, the second lens L2 may be disposed between the first lens L1 and the N-th lens Ln. In addition, the second lens L2 may be disposed between the first light guide LG1 and the N-th lens Ln.

At least part of the optical signal generated by the optical signal generation unit 230 may pass through the second lens L2 before passing through or reflected by the first light guide LG1. That is, for example, part of the reflected polarized light may pass through the second lens L2 before the first light guide LG1.

Describing FIG. 26d more specifically, unlike the projection device in other embodiments, according to still another modified example, the position between the plurality of lenses and the first light guide LG1 in the barrel 210 may be different. Except the contents described below, the contents described in each embodiment of the present specification may be applied.

In addition, in a projection device according to still another modified example, the intermediate lens MO may not exist between the first light guide LG1 and the second light guide LG2. Accordingly, decrease in the light efficiency due to absorption of part of light or the like can be prevented.

In addition, at least one among the first intermediate lens and the second intermediate lens may not exist. For example, only the second intermediate lens (or the first intermediate lens) may exist between the first light guide LG1 and the second light guide LG2.

Furthermore, the projection device may further include a third light guide additionally disposed between the first light guide and the second light guide. The third light guide may include a prism or the like. The third light guide may change the path of light. Accordingly, the light path can be easily changed in correspondence to the shape of the projection device.

Furthermore, the projection device may provide the image signal described above through one light source, without the second light guide. That is, only one light may be provided to the display unit by one light source. For example, in the case of providing only information to the user, the light source device may have only one light source.

In addition, the light source may emit two lights. For example, the two lights may be two among red, green and blue. Or, the lights may include white light.

## Claims

1. A projection device comprising:
a light guide;
a first light source disposed at a first side of the light guide;
a lens group disposed at a fourth side of the light guide; and
a first side lens disposed between the first side of the light guide and the first light source, wherein
the first side of the light guide is overlapped with the fourth side of the light guide in an optical-axis direction of the lens group, and the first side lens is in contact with the light guide.

2. The projection device according to claim 1, wherein
the lens group includes first to N-th lenses,
the first lens is disposed farthest from the fourth side of the light guide, of which a side opposite to a side facing the fourth side is convex,
the N-th lens is disposed closest to the light guide, of which a side facing the fourth side of the light guide is concave,
a side of the first side lens adjacent to the first light source is convex,
power of the first lens is positive,
power of the N-th lens is negative, and
composite power of lenses between the first lens and the N-th lens is positive or negative.

3. The projection device according to claim 1, comprising:
a second light source disposed on a second side of the light guide;
a third light source disposed on a third side of the light guide;
a second side lens disposed between the second side of the light guide and the second light source; and
a third side lens disposed between the third side of the light guide and the third light source, wherein
a side of the second side lens adjacent to the second light source is convex, a side of the third side lens adjacent to the third light source is convex, and the second side of the light guide is disposed to face the third side of the light guide with the light guide interposed therebetween.

4. The projection device according to claim 1, wherein the first side lens is in contact with the light guide, and a radius of curvature of the first side lens is 100 mm or more on an optical axis of a side adjacent to the light guide.

5. The projection device according to claim 1, wherein the light guide and the first side lens are in contact with each other by an adhesive.

6. The projection device according to claim 1, wherein a side surface of the light guide is larger than or equal to a side of the first side lens adjacent to the light guide.

7. The projection device according to claim 1, wherein a side of the first side lens adjacent to the light guide is a flat surface.

8. A projection device comprising:
N lenses and a first light source;
a light guide disposed between the N lenses and the first light source;
a first side lens disposed between the light guide and the first light source, wherein
a side of a first lens disposed farthest from the light guide, among the N lenses, opposite to a side facing the light guide is convex, and a side of an N-th lens disposed closest to the light guide, facing the light guide, is concave.

9. The projection device according to claim 8, wherein an effective diameter of the first lens, among the N lenses, is the largest, an effective diameter of the N-th lens, among the N lenses, is the smallest, and an effective diameter of a lens disposed between the first lens and the N-th lens is smaller than the effective diameter of the first lens and larger than the effective diameter of the N-th lens.

10. The projection device according to claim 8, wherein the first light source is an RGB LED or a single-color LED, which is one among RGB.
